(19) 

Europäisches
Patentamt
European
Patent Office
Office européen
des brevets

(11) **EP 4 738 130 A1**

(12) **EUROPEAN PATENT APPLICATION**
published in accordance with Art. 153(4) EPC

(43) Date of publication:
06.05.2026 Bulletin 2026/19

(21) Application number: 24948082.3

(22) Date of filing: 18.12.2024

(51) International Patent Classification (IPC):
*G06F 12/1009* (2016.01)   *G06F 12/1027* (2016.01)

(86) International application number:
PCT/CN2024/140228

(87) International publication number:
WO 2026/040275 (26.02.2026 Gazette 2026/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.08.2024 CN 202411142514

(71) Applicant: Hygon Information Technology Co., Ltd.
Tianjin 300392 (CN)

(72) Inventors:
• LIU, Yu
  Tianjin 300392 (CN)
• HU, Jinfeng
  Tianjin 300392 (CN)
• DAI, Kaiyong
  Tianjin 300392 (CN)
• PAN, Yu
  Tianjin 300392 (CN)

(74) Representative: Maiwald GmbH
Elisenhof
Elisenstraße 3
80335 München (DE)

(54) **ADDRESS TRANSLATION METHOD AND APPARATUS, AND ELECTRONIC DEVICE AND STORAGE MEDIUM**

(57) Embodiments of the present disclosure provides an address translation method and apparatus, an electronic device, and a storage medium. The address translation method is applied to an address translation apparatus, the apparatus includes a plurality of sets of translation lookaside buffers, each set is configured to store page table information for translating a virtual address into a physical address. The address translation method includes: in response to obtaining a first virtual address translation request, determining a target translation lookaside buffer from the plurality of sets of translation lookaside buffers according to a first mapping algorithm, where the first virtual address translation request includes an object virtual address; accessing page table information in the target translation lookaside buffer to translate the object virtual address into an object physical address; the method further includes: acquiring access frequency information for each set of the plurality of sets of translation lookaside buffers; determining, based on the access frequency information, whether the first mapping algorithm requires updating; and in response to the first mapping algorithm requiring updating, updating the mapping algorithm to a second mapping algorithm.

S203 → Acquiring access frequency information for each set of the plurality of sets of translation lookaside buffers

S204 → Determining, based on the access frequency information, whether the first mapping algorithm requires updating

S205 → In response to determining that the first mapping algorithm requires updating, updating the first mapping algorithm to a second mapping algorithm

Fig. 2B

EP 4 738 130 A1

## Description

The present application claims the priority to Chinese Patent Application No. 202411142514.0, filed on August 19, 2024, the entire disclosure of which is incorporated herein by reference as portion of the present application.

## TECHNICAL FIELD

Embodiments of the present disclosure relate to an address translation method and an apparatus, an electronic device and a storage medium.

## BACKGROUND

Currently, devices that require virtual addressing, such as Central Processing Unit (CPU), chips and Graphics Processing Unit (GPU), etc., typically have a specific address translation apparatus responsible for translating virtual addresses to physical addresses. For example, the CPU has a Memory Management Unit (MMU) that is responsible for translating virtual addresses to physical addresses.

## SUMMARY

At least one embodiment of the present disclosure provides an address translation method, applied to an address translation apparatus, where the address translation apparatus includes a plurality of sets of translation lookaside buffers, each set of translation lookaside buffers includes first page table information for translating a virtual address into a physical address, and the method includes: in response to obtaining a first virtual address translation request, determining a target translation lookaside buffer from the plurality of sets of translation lookaside buffers according to a first mapping algorithm, where the first virtual address translation request includes an object virtual address; and accessing first page table information in the target translation lookaside buffer to translate the object virtual address into an object physical address, where the method further includes: acquiring access frequency information for each set of the plurality of sets of translation lookaside buffers; determining, based on the access frequency information, whether the first mapping algorithm requires updating; and in response to determining that the first mapping algorithm requires updating, updating the first mapping algorithm to a second mapping algorithm.

For example, in the address translation method provided by some embodiments of the present disclosure, the address translation apparatus further includes a multi-level page table query module, and the multi-level page table query module includes second page table information, and accessing the first page table information in the target translation lookaside buffer to translate the object virtual address into the object physical address includes: accessing the first page table information in the target translation lookaside buffer, and determining whether the first target page table information that matches the first virtual address translation request exists in the first page table information; in response to the first target page table information not existing in the target translation lookaside buffer, providing the first virtual address translation request to the multi-level page table query module; determining whether second target page table information that matches the first virtual address translation request exists in the second page table information; and in response to the second target page table information that matches the first virtual address translation request not existing in the second page table information, translating the object virtual address into the object physical address based on translation information provided by an external memory.

For example, in the address translation method provided by some embodiments of the present disclosure, the first page table information includes a plurality of page table entries, each page table entry corresponds to a physical page, the second page table information includes a multi-level page table, each level of the page table includes a plurality of page directory entries, and each page directory entry is used to point to a physical address of a next-level page table, where each page directory entry in a last-level page table of the multi-level page table is used to point to a page table entry in the first page table information.

For example, in the address translation method provided by some embodiments of the present disclosure, determining whether the second target page table information that matches the first virtual address translation request exists in the second page table information includes: acquiring, based on the object virtual address and a base address, a first page table read address of at least one level of the multi-level page table; and determining, based on the first page table read address, whether the second target page table information that matches the first virtual address translation request exists in the second page table information.

For example, in the address translation method provided by some embodiments of the present disclosure, in response to the second target page table information that matches the first virtual address translation request not existing in the second page table information, translating the object virtual address into the object physical address based on the translation information provided by the external memory, includes: in response to the second target page table information that matches the first virtual address translation request not existing in the second page table information, determining whether a merge signal is valid; in response to the merge signal being valid, comparing whether the first page table read address is identical to a second page table read address of a second virtual address translation request preceding the first virtual address translation request; in response to the first page table read address being identical to the second page table read address, merging the first virtual address translation request with the second virtual address translation request, and waiting for the translation information that is provided by the external memory in response to the second virtual address translation request; and translating the object virtual address into the object physical address based on the translation information.

For example, in the address translation method provided by some embodiments of the present disclosure, in response to the second target page table information that matches the first virtual address translation request not existing in the second page table information, translating the object virtual address into the object physical address based on the translation information provided by the external memory, further includes: in response to the first page table read address and the second page table read address being different, providing a page table read request based on the first virtual address translation request to the external memory to acquire the translation information from the external memory; and updating the merge signal to be invalid.

For example, in the address translation method provided by some embodiments of the present disclosure, in response to the second target page table information that matches the first virtual address translation request not existing in the second page table information, translating the object virtual address into the object physical address based on the translation information provided by the external memory, further includes: in response to the merge signal being invalid, providing a page table read request based on the first virtual address translation request to the external memory to acquire the translation information from the external memory; and updating the merge signal to be valid.

For example, in the address translation method provided by some embodiments of the present disclosure, in response to the second target page table information that matches the first virtual address translation request not existing in the second page table information, translating the object virtual address into the object physical address based on the translation information provided by the external memory, further includes: in response to receiving the translation information that is provided by the external memory in response to the second virtual address translation request, updating the merge signal to be invalid.

For example, in the address translation method provided by some embodiments of the present disclosure, the page table read request includes: a page table read address and an object virtual address of a virtual address translation request, and a hardware access unit identifier which providing the virtual address translation request, where the page table read address is obtained based on the base address and page directory entry data of at least one level of the multi-level page table.

For example, in the address translation method provided by some embodiments of the present disclosure, accessing the first page table information in the target translation lookaside buffer to translate the object virtual address into the object physical address includes: accessing the first page table information in the target translation lookaside buffer, and determining whether a target page table entry that matches the object virtual address translation request exists in the first page table information; and in response to the target page table entry that matches the object virtual address translation request existing in the first page table information, determining the object physical address corresponding to the object virtual address based on the target page table entry and an in-page offset indicated by the object virtual address.

For example, in the address translation method provided by some embodiments of the present disclosure, the translation information includes the target page table entry.

For example, in the address translation method provided by some embodiments of the present disclosure, acquiring the access frequency information for each set of the plurality of sets of translation lookaside buffers includes: counting a number of accesses for each set of the plurality of sets of translation lookaside buffers, and obtaining a count value of each set of the plurality of sets of translation lookaside buffers within a preset time period.

For example, in the address translation method provided by some embodiments of the present disclosure, determining, based on the access frequency information, whether the first mapping algorithm requires updating, includes: calculating an average access value of count values of the plurality of sets of translation lookaside buffers based on the count value of each set of the plurality of sets of translation lookaside buffers; acquiring a permitted access deviation; calculating an effective access rate of the plurality of sets of translation lookaside buffers based on the permitted access deviation and the average access value; and determining, based on the effective access rate, whether the first mapping algorithm requires updating.

For example, in the address translation method provided by some embodiments of the present disclosure, calculating the effective access rate of the plurality of sets of translation lookaside buffers based on the permitted access deviation and the average access value includes: calculating an access deviation value of each set of the plurality of sets of translation lookaside buffers based on the permitted access deviation; calculating an effective utilization indicator value of each set of the plurality of sets of translation lookaside buffers based on the access deviation value, where for each set of the plurality of sets of translation lookaside buffers, in response to sum of the access deviation value and the count value being greater than or equal to the average access value, setting an effective utilization indicator value of an translation lookaside buffer to a first preset value, and in response to the sum of the access deviation value and the count value being less than the average access value, setting the effective utilization indicator value of the translation lookaside buffer to a second preset value; and setting an average value of effective utilization indicator values of the plurality of sets of translation lookaside buffers as the effective access rate.

For example, in the address translation method provided by some embodiments of the present disclosure, determining, based on the effective access rate, whether the first mapping algorithm requires updating, includes: in response to the effective access rate being greater than or equal to a preset access rate, determining that the first mapping algorithm does not require updating; and in response to the effective access rate being less than the preset access rate, determining that the first mapping algorithm requires updating.

For example, in the address translation method provided by some embodiments of the present disclosure, the first mapping algorithm includes: determining the target translation lookaside buffer based on a first target bit of an object virtual address in a virtual address translation request, and the second mapping algorithm includes: determining the target translation lookaside buffer based on a second target bit of the object virtual address in the virtual address translation request, where the first target bit and the second target bit are different.

For example, in the address translation method provided by some embodiments of the present disclosure, the first target bit includes a plurality of consecutive first bits in the object virtual address, and the second target bit includes a plurality of consecutive second bits in the object virtual address.

At least one embodiment of the present disclosure further provides an address translation apparatus, which includes: an address translation module, including a plurality of sets of translation lookaside buffers; and an arbitration module, configured to in response to obtaining a first virtual address translation request, determine a target translation lookaside buffer from a plurality of sets of translation lookaside buffers according to a first mapping algorithm, where the first virtual address translation request includes an object virtual address, where each set of the plurality of sets of translation lookaside buffers is configured to store the first page table information for translating the object virtual address into an object physical address, the address translation module is configured to: access first page table information in the target translation lookaside buffer to translate the object virtual address into an object physical address, where the address translation apparatus further includes: an address translation performance monitoring module, configured to: acquire access frequency information for each set of the plurality of sets of translation lookaside buffers; determine, according to the access frequency information, whether the first mapping algorithm requires updating; and in response to determining that the first mapping algorithm requires updating, update the first mapping algorithm to a second mapping algorithm.

For example, the address translation apparatus provided by some embodiments of the present disclosure further includes: a multi-level page table query module, the multi-level page table query module includes second page table information, where the address translation module is configured to: access the first page table information in the target translation lookaside buffer, and determine whether first target page table information that matches the first virtual address translation request exists in the first page table information; and in response to the first target page table information not existing in the target translation lookaside buffer, provide the first virtual address translation request to the multi-level page table query module; the multi-level page table query module is configured to: receive the first virtual address translation request provided by the address translation module; determine whether second target page table information that matches the first virtual address translation request exists in the second page table information; and in response to the second target page table information that matches the first virtual address translation request not existing in the second target page table information, acquire translation information provided by an external memory, where the translation information is used to translate the object virtual address into the object physical address.

For example, in the address translation apparatus provided by some embodiments of the present disclosure, the first page table information includes a plurality of page table entries, each page table entry corresponding to a physical page, and the second page table information includes a multi-level page table, and each level of the page table includes a plurality of page directory entries, and each page directory entry is used to point to a physical address of a next-level page table, where each page directory entry in a last-level page table of the multi-level page table is used to point to a page table entry in the first page table information.

For example, in the address translation apparatus provided by some embodiments of the present disclosure, the multi-level page table query module is configured to: acquire, based on the object virtual address and a base address, a first page table read address of at least one level of the multi-level page table; determine, based on the first page table read address, whether the second target page table information that matches the first virtual address translation request exists in the second page table information.

For example, in the address translation apparatus provided by some embodiments of the present disclosure, the multi-level page table query module includes an identical-read-address merge unit and a translation information cache unit, where the identical-read-address merge unit is configured to: in response to the second target page table information that matches the first virtual address translation request not existing in the second page table information, determine whether a merge signal is valid; in response to the merge signal being valid, compare whether the first page table read address is identical to a second page table read address of a second virtual address translation request preceding the first virtual address translation request; in response to the first page table read address being identical to the second page table read address, merge the first virtual address translation request with the second virtual address translation request, and wait for the translation information that is provided by the external memory in response to the second virtual address translation request, where the translation information cache unit is configured to: cache the translation information, and in response to the address translation module being in an idle state, provide the translation information to the address translation module.

At least one embodiment of the present disclosure further provides an electronic device, which includes: a processor; and a memory, including one or more computer program instructions, where the one or more computer program instructions are stored in the memory, and the one or more computer program instructions, when executed by the processor, implement the address translation method according to any embodiments of the present disclosure.

At least one embodiment of the present disclosure further provides a computer-readable storage medium, non-transitorily storing a computer-readable instruction, where the computer-readable instruction, when executed by a processor, implements the address translation method according to any embodiments of the present disclosure.

BRIEF DESCRIPTION OF DRAWINGS

In order to clearly illustrate the technical solution of the embodiments of the present disclosure, the drawings of the embodiments will be briefly described in the following; it is obvious that the described drawings are only related to some embodiments of the present disclosure and thus are not limitative of the present disclosure.

Fig. 1A shows a system schematic diagram of a connection between an address translation apparatus, a hardware access unit, and an external memory;
Fig. 1B shows a schematic diagram of a 4-level page table structure;
Fig. 2A and Fig. 2B show flowcharts of an address translation method provided by at least one embodiment of the present disclosure;
Fig. 3 shows a schematic block diagram of an address translation apparatus provided by at least one embodiment of the present disclosure;
Fig. 4A shows a method flowchart of S202 in Fig. 2A provided by at least one embodiment of the present disclosure;
Fig. 4B shows a schematic block diagram of an arbitration module in Fig. 3 provided by at least one embodiment of the present disclosure;
Fig. 5 shows a schematic block diagram of an L2 TLB in Fig. 3 provided by at least one embodiment of the present disclosure;
Fig. 6 shows a schematic diagram of the principle of querying a page table through a virtual address and a page table base address under a 4-level page table structure provided by some embodiments of the present disclosure;
Fig. 7 shows a schematic block diagram of a multi-level page table query module in Fig. 3 provided by at least one embodiment of the present disclosure;
Fig. 8A shows a method flowchart of S204 in Fig. 2B provided by at least one embodiment of the present disclosure;
Fig. 8B shows a schematic block diagram of an address translation performance monitoring module in Fig. 3 provided by at least one embodiment of the present disclosure;
Fig. 8C shows a flowchart of another address translation method provided by at least one embodiment of the present disclosure;
Fig. 9 shows a schematic diagram of an address translation apparatus provided by at least one embodiment of the present disclosure;
Fig. 10A shows a schematic block diagram of an electronic device provided by some embodiments of the present disclosure;
Fig. 10B shows a schematic block diagram of another electronic device provided by some embodiments of the present disclosure; and
Fig. 11 shows a schematic diagram of a storage medium provided by some embodiments of the present disclosure.

DETAILED DESCRIPTION

In order to make objects, technical details and advantages of the embodiments of the present disclosure apparent, the technical solutions of the embodiments are described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the present disclosure.

Unless otherwise defined, all the technical and scientific terms used herein have the same meanings as commonly understood by those of ordinary skill in the art to which the present disclosure belongs. The terms "first", "second", and the like., which are used in the description and the claims of the present disclosure, are not intended to indicate any sequence, amount or importance, but used to distinguish various components. Similarly, the terms "a", "an", "the", or the like are not intended to indicate a limitation of quantity, but indicate that there is at least one. The terms, such as "comprise/comprising", "include/including", or the like are intended to specify that the elements or the objects stated before these terms encompass the elements or the objects and equivalents thereof listed after these terms, but not preclude other elements or objects. The terms, such as "connect/connecting/connected", "couple/coupling/-coupled", or the like, are not limited to a physical connection or mechanical connection, but may include an electrical connection/coupling, directly or indirectly. The terms, "on", "under", "left", "right", or the like are only used to indicate relative position relationship, and when the position of the object which is described is changed, the relative position relationship may be changed accordingly.

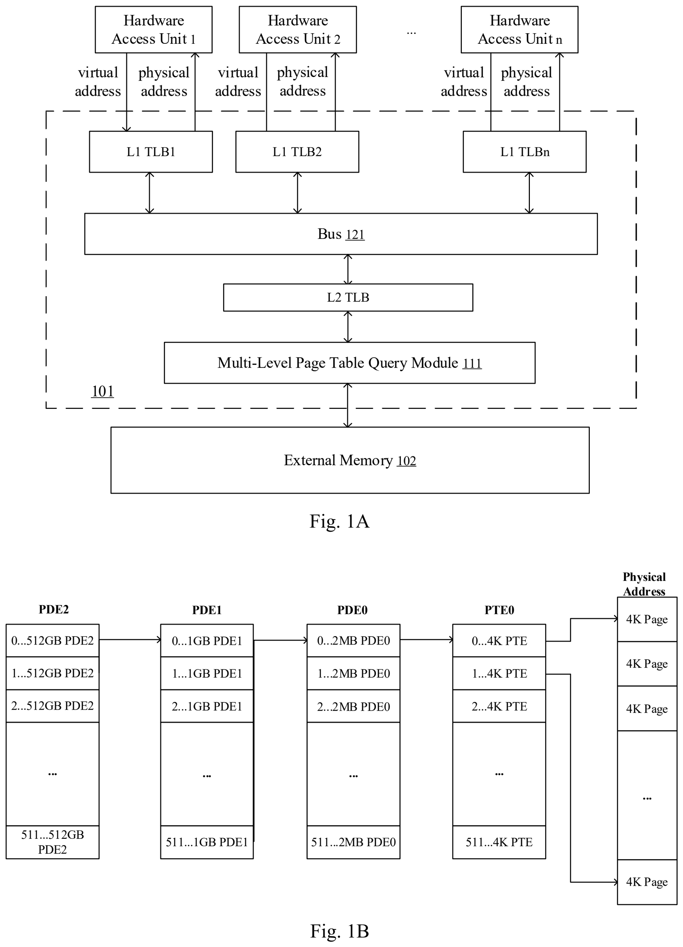

Fig. 1A shows a system schematic diagram of a connection between an address translation apparatus, a hardware access unit, and an external memory; Fig. 1B shows a schematic diagram of a 4-level page table structure.

As shown in Fig.1A, the system includes an address translation apparatus 101, n hardware access units and an external memory 102. The address translation unit 101 is, for example, an MMU in a CPU. The n hardware access units include, for example, hardware access unit 1, hardware access unit 2, ..., hardware access unit n. The external memory 102 may include, for example, a physical memory.

An execution program can only use a virtual memory address, which must be translated to a physical memory address in order to access the corresponding data in the physical memory, and such translation is very necessary. Most mainstream address translation apparatuses use a multi-level page table structure to translate a virtual address into a physical address.

As shown in Fig. 1B, each of the first 3 levels of the page tables stores a page directory entry (PDE), and the PDE is used to acquire the physical address of a next-level page table. The first 3 levels of the page tables, for example, include a first-level page table PDE2, a second-level page table PDE1, and a third-level page table PDE0. The last-level page table (i.e., a fourth-level page table PTE0) stores a page table entry (PTE). The page table entry is used to acquire the actual physical address in the memory. In this example, the full address translation process requires reading the page table four times, and the page table is typically stored in a physical memory, and the entire address translation process has a significant delay, so the address translation apparatus typically uses a translation lookaside buffer (TLB) to reduce the impact of read back latency on performance. In the multi-level page table structure, each level of PDE and PTE has dedicated TLB to store relevant page table information. If a PDE or PTE that matches the virtual address translation request exists in the TLB, it is called a "hit"; otherwise, it is called "miss". In response to a TLB miss, it is needed to read the PDE or PTE information that matches the virtual address translation request in the multi-level page table structure from the physical memory and update the TLB. A TLB hit can avoid the process of re-reading PDE or PTE in the physical memory, and the actual translation speed is much faster, so the performance of the TLB is particularly important.

As shown in Fig. 1A, the address translation apparatus 101 includes n first-level (L1) TLBs, namely L1 TLB1, L1 TLB2, ..., L1 TLBn, and a second-level TLB (L2 TLB). The n first-level TLBs correspond one-to-one with n hardware access units. Compared with L1 TLB, the L2 TLB has bigger capacity and can store more PTEs and PDEs. The address translation apparatus 101 further includes a multi-level page table query module and a bus.

When any hardware access unit of hardware access unit 1 to hardware access unit n requires address translation, the hardware access unit sends a virtual address translation request to a corresponding L1 TLB. When the L1 TLB receives a virtual address translation request from the hardware access unit, whether a hit occurs in the L1 TLB according to the virtual address within the address translation request is determined. In response to an L1 TLB hit, the physical memory address is determined based on the physical address field in the hit L1 TLB and the offset of its corresponding virtual address, and is sent to the hardware access unit. In response to an L1 TLB miss, a page table read request is sent to the L2 TLB via bus 121. In response to an L2 TLB hit, it is sent to the L1 TLB via bus 121, and the L1 TLB then determines the physical memory address according to the physical address field in the PTE plus the offset of the corresponding virtual address, and sends it to the hardware access unit, while updating the L1 TLB. In response to an L2 TLB miss, information such as the virtual address is sent to the multi-level page table query module 111. The multi-level page table query module 111 has M TLB modules for storing PDE and PTE information of a M-level page table structure, where M is an integer greater than or equal to 1. For example, for a 4-level page table structure, M=4. When the multi-level page table query module 111 receives a virtual address translation request from the L2 TLB, the PDE and PTE that match the virtual address translation request are queried level by level from the M TLB modules. In response to the PDE or PTE information that matches the virtual address translation request not existing in the M TLB modules, a read request is sent to the external memory 102 to read the PDE or PTE information in the multi-level page table stored in the external memory 102, and the corresponding TLB is updated. Until a PTE that matches the virtual address translation request is found, the PTE is returned in sequence to the L2 TLB and L1 TLB, and the data of the L2 TLB and the L1 TLB is updated. The L1 TLB determines the physical memory address based on the physical address field in the matched PTE and the offset of the corresponding virtual address, and sends the physical memory address to the hardware access unit, and at this point, the entire address translation process is completed.

At present, the data cached in the address translation apparatus includes PTE and PDE. After a miss occurs in the previous level of TLB, it queries level by level in the next level of TLB until the PTE that matches the virtual address translation request is obtained, and the physical address field is extracted from the PTE, then the actual physical address is obtained by adding the extracted physical memory page base address to the corresponding offset in the virtual address. and information such as the physical address is returned to the hardware access unit, and the data of the missed TLB in the address translation apparatus is updated.

The capacity of the TLB within the address translation apparatus 101 is limited. When a large number of threads are executed in parallel instantaneously, especially with irregular memory access patterns, the data stored in the TLB is frequently replaced, and the hit rate of the TLB drops significantly. In such situation, the address translation apparatus 101 needs to send page table read requests to the physical memory frequently to read the PDE or PTE in the multi-level page table stored in the physical memory. However, the large number of read requests may lead to severe blocking of the modules between the address translation apparatus and the physical memory, and the latency time of reading back from the PDE or PTE increases. In this situation, a faster processor core or a lager physical memory may not help much, and increasing the TLB capacity of the address translation apparatus 101 may also lead to problems such as larger chip area and higher power consumption.

Therefore, the current TLB cache resource allocation is unreasonable, and when faced with a large number of virtual address translation requests with irregular memory access patterns, the TLB resources cannot be fully utilized, and the address translation efficiency is greatly reduced, thus the latency time of the entire address translation process is increased, and the system performance is reduced.

The present disclosure provides an address translation method applied to an address translation apparatus, the address translation apparatus includes a plurality of sets of translation lookaside buffers, and each set of the translation lookaside buffers is configured to store the first page table information for translating a virtual address into a physical address. The method includes: in response to obtaining a first virtual address translation request, determining a target translation lookaside buffer from the plurality of sets of translation lookaside buffers according to a first mapping algorithm, where the first virtual address translation request includes an object virtual address; and accessing first page table information in the target translation lookaside buffer to translate the object virtual address into an object physical address, where the method further includes: acquiring access frequency information for each set of the plurality of sets of translation lookaside buffers; determining, based on the access frequency information, whether the first mapping algorithm requires updating; and in response to determining that the first mapping algorithm requires updating, updating the first mapping algorithm to a second mapping algorithm. This method can alleviate the uneven allocation of the virtual address translation request translation lookaside buffer resources, and improve the utilization of the translation lookaside buffer resources.

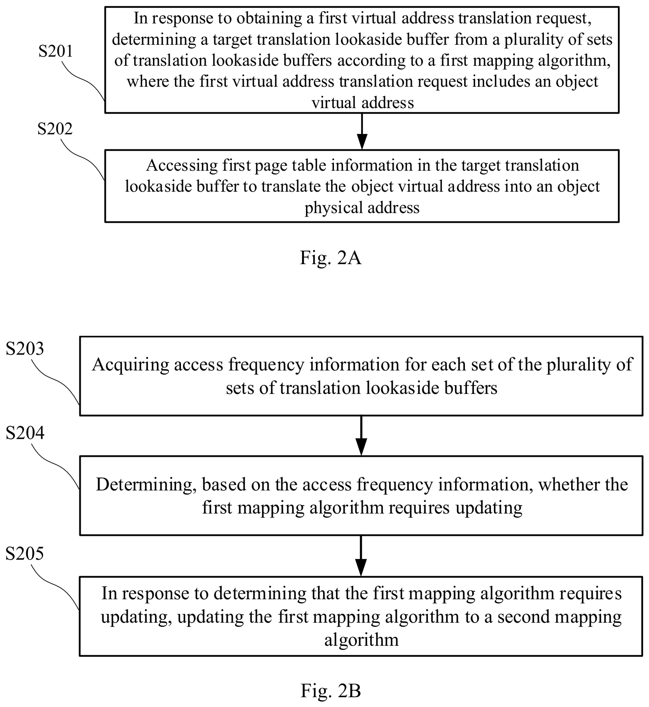

Fig. 2A and Fig. 2B show flowcharts of an address translation method provided by at least one embodiment of the present disclosure.

As shown in Fig. 2A, the address translation method includes S201 and S202; as shown in Fig. 2B, the address translation method further includes S203 to S205 in addition to S201 and S202. The address translation methods shown in Fig. 2A and Fig. 2B are applied to an address translation apparatus. The address translation apparatus includes a plurality of sets of translation lookaside buffers, each set of the plurality of sets of translation lookaside buffers includes the first page table information used to translate a virtual address into a physical address.

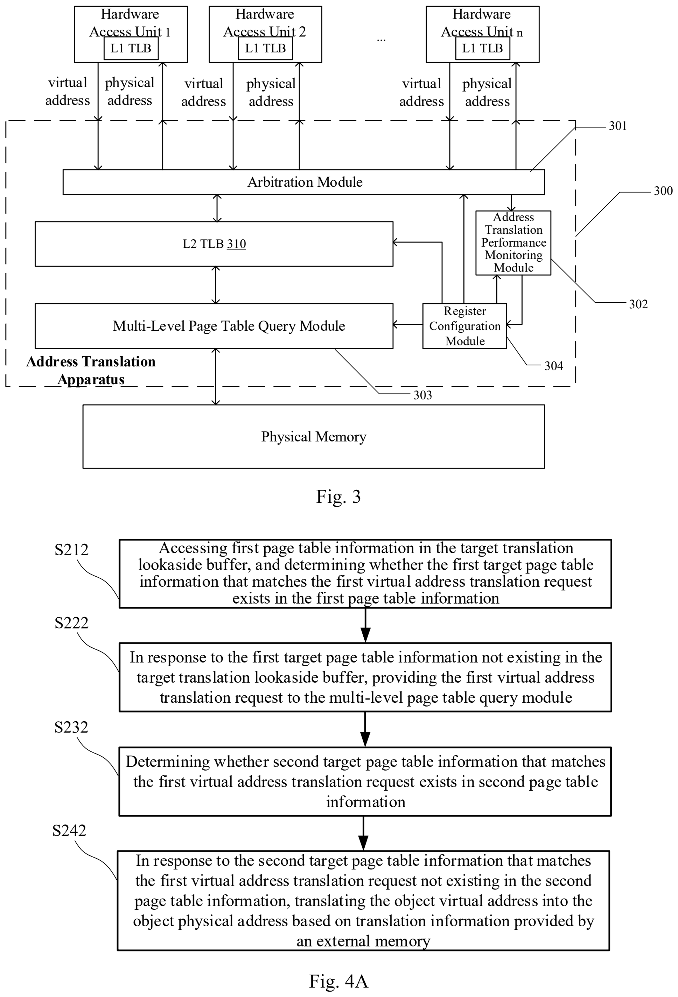

Fig. 3 shows a schematic block diagram of an address translation apparatus provided by at least one embodiment of the present disclosure.

As shown in Fig. 3, the address translation apparatus 300 includes L2 TLB 310, for example, L2 TLB 310 includes a plurality of sets of translation lookaside buffers. The address translation method shown in Fig. 2A and Fig. 2B is applied, for example, to the address translation apparatus 300, that is, the address translation apparatus 300 can perform the address translation method shown in Fig. 2A and Fig. 2B.

In some embodiments of the present disclosure, each set of the plurality of sets of translation lookaside buffers includes first page table information, and the first page table information includes, for example, a plurality of page table entries, and each page table entry corresponding to a physical page. For example, the first page table information is the fourth-level page table PTE0 as shown in Fig. 1B. The fourth-level page table PTE0 includes a plurality of page table entries, each page table entry corresponding to an actual physical page. A virtual address may be translated into an actual physical page by querying the fourth-level page table PTE0.

S201: in response to obtaining a first virtual address translation request, determining a target translation lookaside buffer from a plurality of sets of translation lookaside buffers according to a first mapping algorithm, where the first virtual address translation request includes an object virtual address.

S202: accessing first page table information in the target translation lookaside buffer to translate the object virtual address into an object physical address.

S203: acquiring access frequency information for each set of the plurality of sets of translation lookaside buffers.

S204: determining, based on the access frequency information, whether the first mapping algorithm requires updating.

S205: in response to determining that the first mapping algorithm requires updating, updating the first mapping algorithm to a second mapping algorithm.

This method enables the address translation apparatus to adaptively adjust the mapping algorithm when faced with a large number of irregular virtual address translation requests, avoiding the situation where virtual address translation requests are only mapped to a single TLB, thereby ensuring the utilization of TLB resources.

For S201, for example, the address translation apparatus 300 receives first virtual address translation requests provided by hardware access unit 1 to hardware access unit n.

Hardware access unit 1 to hardware access unit n are, for example, components in a CPU or GPU that requires address translation, and may be, for example, a smart direct memory access (SDMA), a semaphore module (SEM), a command processor fetcher (CPF), and the like.

The first virtual address translation request includes an object virtual address, which needs to be translated into an object physical address.

In some embodiments of the present disclosure, the first mapping algorithm is, for example, determining the target translation lookaside buffer according to the object virtual address. The mapping algorithm that select the target translation lookaside buffer according to the object virtual address is calculated by taking a specified address range from the virtual address. For example, when the L2 TLB 310 contains 8 sets of translation lookaside buffers, the 26th to 24th bits of the 48-bit virtual address may be used as the result of selecting from 8 sets of translation lookaside buffers. It should be noted that the selection of which 3 bits of the virtual address are configured to select the target translation lookaside buffer can be modified according to register configuration.

In some embodiments of the present disclosure, for example, a plurality of consecutive bits are selected as the selection bits of the target translation lookaside buffer, so that the plurality of sets of translation lookaside buffers can be queried uniformly.

As shown in Fig. 3, the address translation apparatus 300 further includes an arbitration module 301. S201, for example, is performed by the arbitration module 301.

For S202, for example, accessing the PTE in the target translation lookaside buffer to obtain a physical page corresponding to the object virtual address.

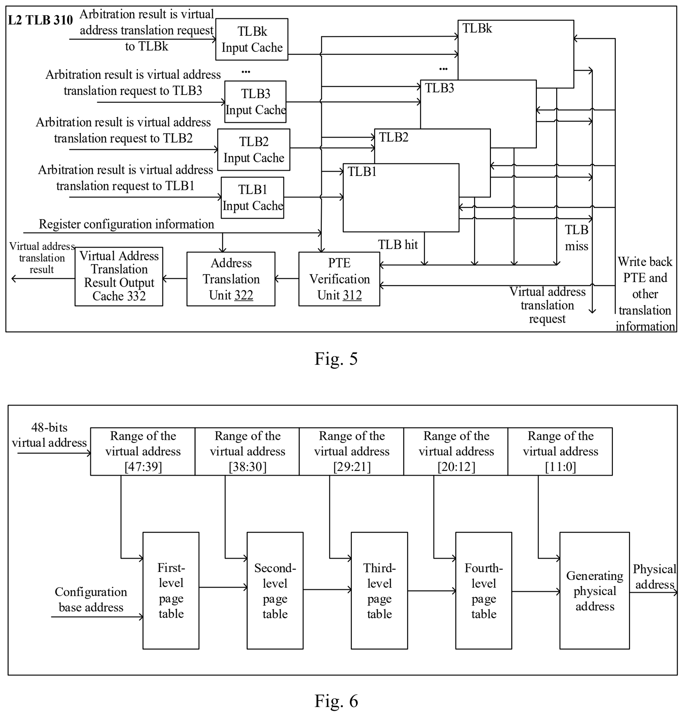

For example, S202 includes accessing the first page table information in the target translation lookaside buffer, determining whether a target page table entry that matches the object virtual address translation request exists in the first page table information; and in response to the target page table entry that matches the object virtual address translation request existing in the first page table information, determining the object physical address corresponding to the object virtual address based on the target page table entry and an in-page offset indicated by the object virtual address. For example, if the target page table entry (PTE) that matches the object virtual address exists in the PTE0 of the target translation lookaside buffer, the object physical address of the object virtual address is determined according to the target page table entry and the in-page offset of the object virtual address. For example, some consecutive bits of the object virtual address indicate the in-page offset. For this embodiment, refer to the description in Fig. 6.

For S203, the access frequency information, for example, is characterized by the number of the translation lookaside buffers are accessed within a preset time period. For example, the number of accesses for each set of the plurality of sets of translation lookaside buffers is counted, and a count value of each set of the plurality of sets of translation lookaside buffers within a preset time period is obtained.

For S204, for example, when the access frequency information indicates that the access frequencies of the plurality of sets of translation lookaside buffers differ significantly, the first mapping algorithm requires updating. Another example is that when the access frequency information indicates that the access frequencies of the plurality of sets of translation lookaside buffers do not differ significantly, or the plurality of sets of translation lookaside buffers are accessed uniformly, the first mapping algorithm does not require updating.

For S205, if the first mapping algorithm requires updating, the first mapping algorithm is updated to a second mapping algorithm. The second mapping algorithm is different from the first mapping algorithm. For example, the specified address ranges of the first mapping algorithm and the second mapping algorithm are different. For example, the first mapping algorithm takes the 26th to 24th bits of the 48-bit virtual address as the result of selecting from 8 sets of translation lookaside buffers, and the second mapping algorithm takes the 24th to 22nd bits of the virtual address as the result of selecting from 8 sets of translation lookaside buffers.

As shown in Fig. 3, the address translation apparatus 300 further includes an address translation performance monitoring module 302. S203 to S205, for example, are performed by the address translation performance monitoring module 302.

In some embodiments of the present disclosure, the address translation apparatus 300 further includes a multi-level page table query module 303. The multi-level page table query module 303 includes second page table information. The second page table information includes a multi-level page table, each level of the multi-level page table includes a plurality of page directory entries, each page table entry is used to point to the physical address of a next level page table. For example, the multi-level page table include the first-level page table PDE2 and the second-level page table PDE1 and the third-level page table PDE0 as shown in Fig. 1B. Each level of the page table includes a plurality of PDEs, which are used to point to the physical address of the next-level page table. Each page directory entry in the last-level page table of the multi-level page table is used to point to the page table entry in the first page table information. For example, each page directory entry in the last-level page table PDE0 of the multi-level page table is used to point to the page table entry in the first page table information PTE0.

In some embodiments of the present disclosure, the address translation apparatus 300 further includes a register configuration module 304. The register configuration module 304 is configured to perform register configuration on the registers of a L2 TLB 310, the arbitration module 301, the multi-level page table query module, and the address translation performance monitoring module 302, for example, to provide register configuration values. For example, the register configuration value for the mapping algorithm of the arbitration module 301 is set, thereby setting the mapping algorithm as a second mapping algorithm. The register configuration module performs register configuration, for example, on a monitoring period in the address translation performance monitoring module 302.

Fig. 4A shows a flowchart of a method for S202 in Fig. 2A provided by at least one embodiment of the present disclosure.

As shown in Fig. 4A, S202 may include S212 to S242.

S212: accessing first page table information in the target translation lookaside buffer, and determining whether the first target page table information that matches the first virtual address translation request exists in the first page table information.

S222: in response to the first target page table information not existing in the target translation lookaside buffer, providing the first virtual address translation request to the multi-level page table query module.

S232: determining whether second target page table information that matches the first virtual address translation request exists in second page table information.

S242: in response to the second target page table information that matches the first virtual address translation request not existing in the second page table information, translating the object virtual address into the object physical address based on translation information provided by an external memory.

For S212, for example, the PTE in the target translation lookaside buffer is accessed, and whether the object virtual address hits the PTE in the target translation lookaside buffer is determined. If the object virtual address hits the PTE in the target translation lookaside buffer, the hit PTE is the first target page table information, that is, the first target page table information indicates the physical page where the object virtual address is located. If the object virtual address misses the PTE in the target translation lookaside buffer, S222 is performed.

For S222, for example, if the object virtual address misses the PTE in the target translation lookaside buffer, an L2 TLB 310 provides the first virtual address translation request to the multi-level page table query module 303.

For S232, for example, whether the object virtual address hits the first-level page table PDE2, the second-level page table PDE1, and the third-level page table PDE0 in the multi-level page table query module 303 is determined.

In some embodiments of the present disclosure, S232 for example includes: based on the object virtual address and a base address, accessing a first page table read address of at least one level of the multi-level page table; based on the first page table read address, determining whether second target page table information that matches the first virtual address translation request exists in second page table information.

The base address, for example, is obtained by configuring the value of the base address register in the register configuration module 304. The base address in the register configuration module 304 specifies the starting address of the first-level page table in physical memory. The data field stored in the first-level page table PDE2 (as the physical base address of the second-level page table PDE1) specifies the starting address of the second-level page table PDE1 in the physical memory, the data field stored in the second-level page table PDE1 (as the physical base address of the third-level page table PDE0) specifies the starting address of the third-level page table PDE0 in the physical memory. The data field stored in the third-level page table PDE0 (as the physical base address of the fourth-level page table PTE0) specifies the starting address of the fourth-level page table PTE0 in the physical memory, and the data field stored in the fourth-level page table specifies the physical memory starting address of the page to which the PTE points.

In some embodiments of the present disclosure, the register configuration module 304 may also be used to configure which level of a page table to start the query, that is, to configure the page table from which the query starts. For example, the register configuration module 304 is set to start the query from the first-level page table PDE2. For example, the multi-level page table query module 303 uses the base address of the register configuration plus the 47th to 39th bits of the virtual address as the read address of the first-level page table PDE2 to query in the PDE2 cache resource. If a match is successful, it uses the matched first-level page table PDE2 field (indicating the PDE1 physical address field) plus the 38th to 30th bits of the virtual address as the read address of the second-level page table PDE1 to query in the second-level page table PDE1 cache resource. If no match is found in the first-level page table PDE2 cache resource, the corresponding PDE2 data is read in physical memory according to the page table read address of the first-level page table PDE2.

In the above example, the sum of the 47th to 39th bits of the object virtual address and the base address in the register configuration module 304 is the read address of the first-level page table PDE2 (an example of the first page table read address). If the read address of the first-level page table PDE2 misses the first-level page table PDE2, it is determined that the second target page table information that matches the first virtual address translation request does not exist in the second page table information. If the read address of the first-level page table PDE2 hits the first-level page table PDE2, the sum of the matched first-level page table PDE2 field and the 38th to 30th bits of the virtual address is used as the read address of the second-level page table PDE1 to query whether a hit occurs in the second-level page table PDE1 cache resource. If a miss occurs, it is determined that the second target page table information that matches the first virtual address translation request does not exist in the second page table information. This process continues sequentially until a match is successful in the third-level page table PDE0, thereby it is determined that the second target page table information that matches the first virtual address translation request exists in the second page table information, and the page table information that matches the object virtual address in the third-level page table PDE0 is the second target page table information.

For S242, for example, if the object virtual address misses the multi-level page table query module 303, the first virtual address translation request is provided to the external memory to access the translation information from the external memory, the translation information is used to translate the object virtual address into the object physical address. The external memory, for example, is the physical memory shown in Fig. 3. For example, the physical memory stores a full 4-level page table, the 4-level page table is, for example, the structure shown in Fig. 1B. The physical memory responds to the first virtual address translation request, and the translation information obtained by querying the 4-level page table is, for example, the PTE hit by the object virtual address, that is, the target page table entry that matches the object virtual address.

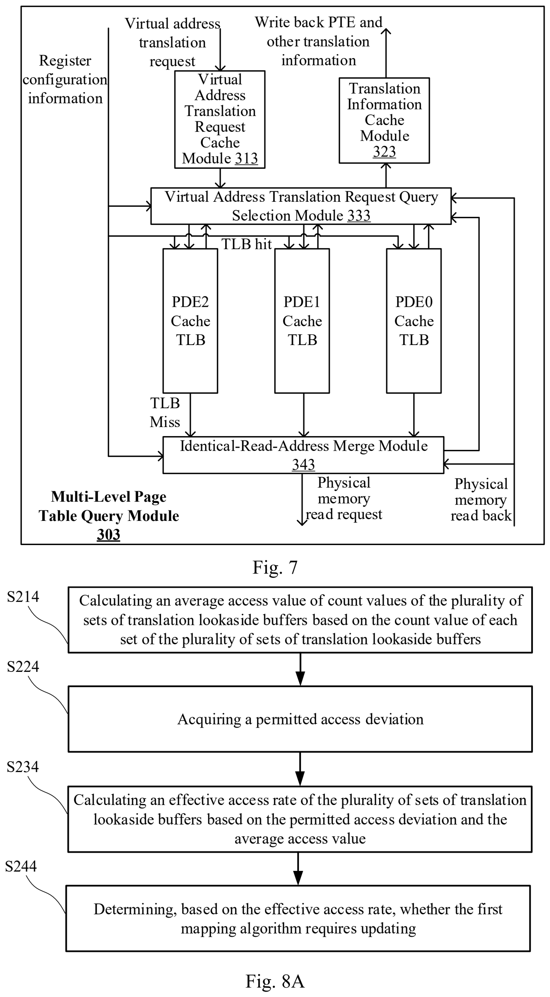

In some embodiments of the present disclosure, S242 may obtain translation information according to whether the merge request signal is valid. For this embodiment, refer to the description of the multi-level page table query module 303 in Fig. 7 below.

The specific implementation of the address translation method provided by the present disclosure is described below in combination with the embodiment shown in Fig. 3.

As shown in Fig. 3, an address translation apparatus 300 can process virtual address translation requests for n hardware access units (for example, hardware access unit 1 to hardware access unit n), the virtual address translation request includes key information such as a virtual address and a hardware access unit identifier, where n is an integer greater than or equal to 1. In some embodiments of the present disclosure, n first-level TLBs may be set in each hardware access unit, as shown in Fig. 3. Each of the hardware access unit 1 to hardware access unit n includes a first-level (L1) TLB. In some other embodiments of the present disclosure, n first-level TLBs may be set in an address translation apparatus 300 as shown in the structure of Fig. 1A. The embodiments of the present disclosure have no limitation on the first-level TLB.

The arbitration module 301 is configured to receive virtual address translation requests from n hardware access units to the cache within the arbitration module 301, and the virtual address translation requests are processed in sequence through an arbitration algorithm, the processing process includes using a mapping algorithm to determine which set (i.e., a target TLB) of k sets of TLBs within the L2 TLB 310 is mapped to the virtual address translation request, and determining the target TLB address index (index) and comparison tag information (tag) according to the virtual address, and then these information is sent to the L2 TLB 310 along with the virtual address translation request; after receiving the virtual address translation result returned from the L2 TLB 310, the virtual address translation result is sent to a corresponding hardware access unit according to the hardware access unit identifier in the virtual address translation result. n and k are integers greater than or equal to 1.

The arbitration module 301 calculates the mapping algorithm for selecting the target TLB according to the virtual address by taking the specified address range from the virtual address. For example, if the L2 TLB 310 contains 8 sets of TLBs, the 26th to 24th bits of the 48-bit virtual address may be used as the result of selecting from 8 sets of TLBs. Which 3 bits in the virtual address to select may be modified through register configuration; selecting consecutive 3 bits address as the target TLB selection bits enables consecutive virtual addresses to query 8 sets of TLBs uniformly.

The arbitration module 301 acquires the index bit of the target TLB according to the specified address range in the virtual address. For example, if the depth of the target TLB is 64, the 20th to 15th bits of the 48-bit virtual address may be used as the index bits of the target TLB. Which 6 bits of the virtual address to select may be modified according to the register configuration; and the PTE data with the depth of the target TLB being index is queried through the value of the index bit for matching. Whether there is a match is determined by comparing the tags; and the arbitration module 301 acquires tag information according to the specified address range in the virtual address, for example, the 47th to 12th bits of the 48-bit virtual address may be sent to the L2 TLB 310 as a tag value for comparison with the tag value with the depth of the target TLB being index. If they are the same, the match is successful; otherwise, the match fails.

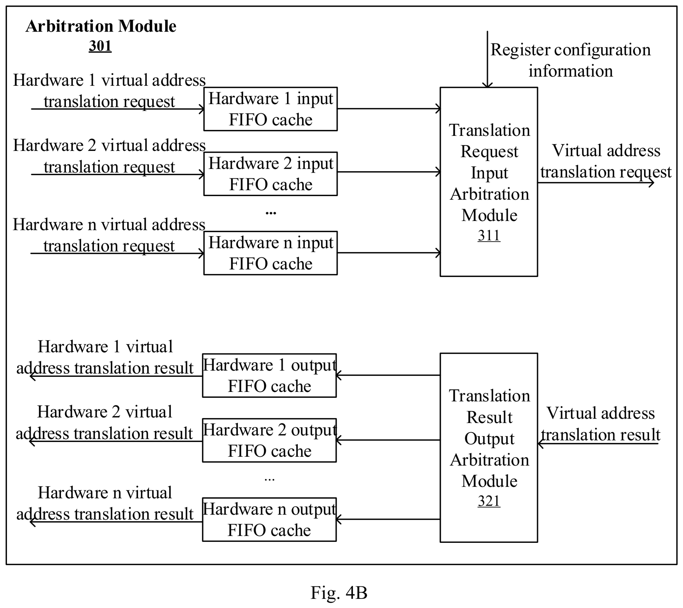

Fig. 4B shows a schematic block diagram of the arbitration module in Fig. 3 provided by at least one embodiment of the present disclosure.

As shown in Fig. 4B, the arbitration module 301 includes a translation request input arbitration module 311, a translation result output arbitration module 321, n hardware input FIFO caches, and n hardware output FIFO caches. The n hardware output FIFO caches correspond one-to-one to n hardware access units, and the n hardware output FIFO caches correspond one-to-one to n hardware access units. n hardware input FIFO caches, for example, include hardware 1 input FIFO cache to hardware n input FIFO cache. n hardware output FIFO caches, for example, include hardware 1 output FIFO cache to hardware n output FIFO cache.

A hardware x input FIFO cache is configured to cache virtual address translation requests from a hardware access unit x, where x is an integer greater than or equal to 1 and less than or equal to n.

The translation request input arbitration module 311 is configured to process a virtual address translation request, for example, a Round-Robin scheduling algorithm is configured to sequentially check whether n hardware input FIFO caches are empty. If not empty, the virtual address translation request (an example of a first virtual address translation request) is read from a hardware input FIFO cache for processing, and through a virtual address and a TLB mapping algorithm, the target TLB, tag, and index information corresponding to the virtual address are calculated, and the above information along with the virtual address translation request are sent to a L2 TLB 310 module; the TLB mapping algorithm may be adjusted through the register configuration module 304. The Round-Robin scheduling algorithms refer to relevant materials in this field and will not be described in detail here. It should be noted that other scheduling algorithms in this field may also be used to sequentially check whether n hardware input FIFO caches are empty. This disclosure does not limit the scheduling algorithm, and those skilled in the art may choose an appropriate scheduling algorithm as required.

The translation result output arbitration module 321 is configured to receive the virtual address translation result from L2 TLB 310 and send the virtual address translation result to a corresponding hardware x output FIFO cache through the hardware access unit identifier in the virtual address translation result.

The hardware x output FIFO cache is configured to cache the virtual address translation result of the hardware access unit x. If the hardware access unit x is in an idle state, the virtual address translation result is sent to the hardware access unit x, where x is an integer greater than or equal to 1 and less than or equal to n.

Fig. 5 shows a schematic block diagram of the L2 TLB in Fig. 3 provided by at least one embodiment of the present disclosure.

As shown in Fig. 5, the L2 TLB 310 includes k TLB input caches, k sets of TLBs, a PTE verification unit 312, an address translation unit 322, and a virtual address translation result output cache 332. The k TLB input caches correspond one-to-one to the k sets of TLBs, where k is an integer greater than or equal to 1. k TLB input caches are designated as TLB 1 input cache, TLB2 input cache, ..., and TLBk input cache, the k sets of TLBs include respectively TLB1, TLB2, ... TLBk.

The L2 TLB 310, for example, includes k sets of TLBs, all of which are configured to store data in the last-level page table of a M-level page table structure, namely PTE data; where M and k are integers greater than or equal to 1. For example, if the M-level page table structure is a 3-level page table structure, the k sets of TLBs store PTE data from the third-level page table; if the M-level page table structure is a 4-level page table structure, the k sets of TLBs store the PTE data from the fourth-level page table. Placing all PTE cache resources within the L2 TLB module increases the hit rate of L2 TLB. Such design optimizes the utilization of PTE cache resources and enhances address translation efficiency.

For example, the k sets of TLB input caches may adopt a set-associative cache structure, or a fully associative cache structure. The description of set-associative cache structures and fully associative cache structures may be referred to relevant materials in this field, and will not be repeated here.

A TLBy input cache is configured to cache a virtual address translation request from the arbitration module 301 with a target TLB of y, where y is an integer greater than or equal to 1 and less than or equal to k. The virtual address translation request includes a virtual address, a hardware access unit identifier, target TLB information, index and tag information, and the like.

A TLBy is configured to retrieve a virtual address translation request from the TLBy input cache and perform matching in the TLBy, where y is an integer greater than or equal to 1 and less than or equal to k. For example, the TLBy locates the tag stored in the index row of TLBy according to the index in the virtual address translation request, and compares it with the tag in the virtual address translation request; if they are the same, the match is successful and the PTE data stored in the index row of TLBy is sent to the PTE verification unit; if they are different, a miss occurs in the TLBy and the virtual address translation request is sent to the multi-level page table query module 303.

The PTE verification unit 312 is configured to perform error checking on the PTE hit in the k sets of TLBs and the PTE returned from the multi-level page table query module 303. Through checking the specific field information in a matched PTE, the PTE verification unit 312 determines, for example, whether the PTE can be used as a normal PTE. For example, whether the valid bit (V bit) of the PTE is valid is checked. If it is invalid, it indicates that the PTE is invalid and cannot be used as a normal PTE. In this situation, the default address configured in the register is sent as the physical address field of the PTE to the address translation unit, and the error indication signal is raised to indicate that the virtual address translation result is problematic. If the V bit of the PTE is valid, the physical address field information of the PTE is sent to the address translation unit 322.

After the physical address information in the PTE field from the PTE verification unit 312 is read by the address translation unit 322, the physical address information and the offset corresponding to the virtual address are added to obtain the physical memory address corresponding to the virtual address translation request, and the physical memory address, along with the virtual address and the hardware access unit identifier, are sent to the virtual address translation result output cache 332 as the virtual address translation result.

The virtual address translation results output cache 332 is configured to store the virtual address translation result. When the arbitration module 301 is in an idle state, the virtual address translation result output cache 332 sends the virtual address translation result to the arbitration module 301.

For example, the L2 TLB 310 is configured to receive virtual address translation requests from the arbitration module 301, and according to the target TLB, and the index and tag information in the virtual address translation request, the index row in the target TLB is located and the tag information stored in the index row is compared with the tag in the virtual address translation request. If the tag in the virtual address translation request is identical to the tag information stored in the index row, the match is successful, and the PTE data stored in the index row is read; and after the PTE data undergoes PTE verification, the PTE data is sent to the address translation unit 322 in L2 TLB 310. The address translation unit 322 reads the physical address field in the PTE, adds the corresponding offset in the virtual address, and obtains the physical memory address corresponding to the virtual address translation request. The physical memory address, along with the virtual address and the hardware access unit identifier, are sent to the arbitration module 301 as the result of the virtual address translation. If the tag in the virtual address translation request is not identical to the tag information stored in the index row, the match is unsuccessful, and the virtual address translation request is sent to the multi-level page table query module 303. The multi-level page table query module 303 returns the PTE and virtual address, hardware access unit identifier, target TLB information, index, and tag information, etc. that matches the virtual address request to the L2 TLB 310. The L2 TLB 310 updates the PTE data and tag data in the index row of the target TLB according to the target TLB information and index. At this point, the L2 TLB 310 sends the returned PTE data, the virtual address, and the hardware access unit identifier to the address translation unit 322 after being verified by the PTE verification unit 312, and after the address translation unit 322 calculates the physical memory address, the physical memory address is sends, along with the virtual address and the hardware access unit identifier, as the virtual address translation result to the arbitration module 301.

The multi-level page table query module 303 is configured to cache the PDE data of all levels of the M-level page table structure except for the last-level page table. Taking the 4-level page table structure in Fig. 1B as an example, the multi-level page table query module 303 caches the data of PDE2, PDE1, and PDE0. When the multi-level page table query module 303 receives a virtual address translation request from the L2 TLB 310, it queries level by level from the PDE data cached in itself, and if there is no matching PDE data in the corresponding level, it needs to determine the address of the PDE data stored in the physical memory through the virtual address offset and the base address of the target level page table, and the target PDE in the physical memory is read and the TLB data is updated based on the PDE data that is read back. This process continues until the PDE0 data is matched, and according to the base address information of the PTE table in PDE0 plus with the corresponding offset of the virtual address, the PTE data is read back from the physical memory and written back to L2 TLB 310.

If M is an integer greater than or equal to 2, when querying PDE data, the multi-level page table query module 303 is further configured to determine whether the matched PDE entry can be directly used as a PTE. For example, a bit of the PDE is selected as a flag bit, and if the flag bit is valid, the PDE can be used as PTE, if the flag bit is invalid, the query needs to be made in the next level of the page table. If a PDE can be used directly as a PTE, the PDE is returned directly to the L2 TLB 310 as PTE data, and the physical address in the PDE field is directly taken as the physical memory page base address, the physical address obtained by adding the corresponding offset of the virtual address with the physical memory page base address is the actual physical address after the virtual address translation.

Considering that not all virtual address translation requests are based on the M-level page table even in the M-level page table structure, for example, when M is 4, in the 4-level page table structure shown in Fig. 1B, some requests are based only on the 1-level page table structure, that is, the translation from virtual address into physical address is only based on the PTE page table in Fig. 1B. In this case, if a miss occurs in the L2 TLB 310, there is no need to query the PDE page table in the multi-level page table query module, instead, a physical memory read request is directly sent to the physical memory through the multi-level page table query module 303 to read the matched PTE data. Some requests are based on a 2-level page table structure, that is, there are only the PDE0 page table and the PTE page table in Fig. 1B. In this case, if a miss occurs in the L2 TLB 310, directly querying in the multi-level page table query module 303 whether the PDE0 page table caches TLB resources, without needing to query the PDE2 page table and PDE1 page table. The multi-level page table query module 303 may decide which level of PDE page table (target level PDE page table) to start querying each time through register configuration.

Fig. 6 shows a schematic diagram of the principle of querying a page table through a virtual address and a page table base address under a four-level page table structure provided by some embodiments of the present disclosure.

Taking the 4-level page table in Fig. 6 as an example, the first-level page table stores PDE2 data, the second-level page table stores PDE1 data, the third-level page table stores PDE0 data, and the fourth-level page table stores PTE data.

Fig. 6 shows the offset meanings represented by each field of the virtual address under the 4-level page table structure. The 47th to 39th bits of the virtual address represent the offset within the first-level page table in the 4-level page tables, the 38th to 30th bits represent the offset within the second-level page table in the 4-level page tables, the 29th to 21st bits represent the offset within the third-level page table in the 4-level page tables, the 20th to 12th bits represent the offset within the fourth-level page table in the 4-level page tables, and the 11th to 0th bits represent the in-page offset within the physical page pointed to by the physical address in PTE. The virtual address field added by the address translation unit in the L2 TLB 310 is the bits 11~0 of the virtual address, thereby obtaining the actual physical memory address.

If at this point the register configuration requires the query to start from the PDE2 cache, the multi-level page table query module 303 queries in the PDE2 cache resource according to the base address of the register configuration plus the 47th to 39th bits of the virtual address as the PDE2 read address of the first-level page table. If a match is successful in the PDE2 cache resource, the PDE1 page table read address is queried in a PDE1 cache resource based on the PDE1 page table physical address field in the matched PDE2 field plus the 38th to 30th bits of the virtual address. If a match is not successful in the PDE2 cache resource, the PDE2 data corresponding to the read address is read in physical memory based on the PDE2 page table read address. The offsets corresponding to the rest of the page tables in the virtual address are used in a similar way and will not be repeated here. The base address of the register configuration specifies the starting address of the first-level page table in the physical memory, and the physical base address of the PDE1 page table in the PDE2 data field stored in the first-level page table specifies the starting address of the second-level page table in the physical memory. The PDE0 page table physical base address in the PDE1 data field stored in the second-level page table specifies the physical start address of the third-level page table in the physical memory, and the PTB page table physical base address in the PDE0 data field stored in the third-level page table specifies the physical start address of the fourth-level page table in the physical memory, the physical address section in the PTE data field stored in the fourth-level page table specifies the starting address of the page to which the PTE points in the physical memory.

Fig. 7 shows a schematic block diagram of the multi-level page table query module in Fig. 3 provided by at least one embodiment of the present disclosure.

As shown in Fig. 7, the multi-level page table query module 303 includes a virtual address translation request cache module 313, a translation information cache module 323, a virtual address translation request query selection module 333, a PDE2 cache TLB, a PDE1 cache TLB, a PDE0 cache TLB, and an identical-read-address merge module 343. The PDE2 cache TLB, the PDE1 cache TLB, and the PDE0 cache TLB, for example, adopt a set-associative cache structure, or a fully associative cache structure.

In some embodiments of the present disclosure, the multi-level page table query module 303 may merge page table read requests with identical read addresses sent to a physical memory through the identical-read-address merge module 343, and the page table read request includes a page table read address of a virtual address translation request, a virtual address, and a hardware access unit identifier that provides the virtual address translation request, etc. The hardware access unit identifier may be, for example, the serial number of the hardware access unit. The page table read address is obtained based on a base address and the page directory entry data of at least one level of the multi-level page table. The page table read address is, for example, the sum of a base address of the register configuration and the page directory entry data in the first-level page table PDE2. Another example is that a page table read address is the page directory entry data in the second-level page table PDE1, which is the sum of a base address of the register configuration and the page directory entry data in the first-level page table PDE2.

S242 may acquire the translation information according to whether the merge signal is valid. For example, it may include: in response to the second target page table information that matches a first virtual address translation request not existing in second page table information, determining whether a merge signal is valid; in response to the merge signal being valid, comparing whether the first page table read address is identical to a second page table read address of a second virtual address translation request preceding the first virtual address translation request; in response to the first page table read address being identical to the second page table read address, merging the first virtual address translation request with the second virtual address translation request, and waiting for the translation information that is provided by an external memory in response to the second virtual address translation request; and translating an object virtual address into an object physical address based on the translation information. The embodiment may effectively merge the identical read address requests in the requests initiated by the address translation apparatus to a physical memory, and alleviating the congestion problem without reducing the hit rate of the address translation apparatus on virtual address translation requests.

For example, if the second target page table information that matches the virtual address of the object does not exist in the multi-level page table query module 303, it is determined whether the merge signal in the identical-read-address merge module 343 is valid.

For example, after the multi-level page table query module 303 sends a page table read request to the physical memory, the identical-read-address merge module 343 records the page table read address data, the virtual address, and the hardware access unit identifier corresponding to the read request, and makes the merge signal be valid. When the next page table read request (an example of the first page table read address of the first virtual address translation request) is sent to the physical memory, if the merge signal is valid, it is compared whether the page table read address in the page table read request is identical to the page table read address in the preceding page table read request (an example of the second page table read address of the second virtual address translation request).

If the page table read request is identical to the preceding page table read address, the merge signal, the virtual address, and the hardware access unit identifier are sent to the virtual address translation request query selection module 333, and the page table read request is no longer sent to the physical memory, waiting for the translation information that is provided by the physical memory in response to the second virtual address translation request.

In some embodiments of the present disclosure, in response to a first page table read address and a second page table read address being different, a page table read request based on the first virtual address translation request is provided to the external memory to acquire the translation information from the external memory; and the merge signal is updated to be invalid. For example, if the page table read request in the above embodiment is inconsistent with the preceding page table read address, the page table read request is sent to the physical memory, and the merge signal is invalidated.

In some embodiments of the present disclosure, in response to a second target page table information that matches a first virtual address translation request not existing in a second page table information, translating an object virtual address into an object physical address based on the translation information provided by an external memory, further includes: in response to receiving the translation information that is provided by the external memory in response to the second virtual address translation request, updating the merge signal to be invalid.

In this embodiment, the merge signal is pulled down (i.e., updated to be invalid), for example, when data is fed back from the physical memory. Because when the data comes back, it is necessary to determine which requests have been merged, and send the read data back to these merged requests, so that subsequent virtual address translation requests can be sent.

For example, the PDE2 cache TLB in the multi-level page table query module 303 needs to continuously send three read requests with identical page table read address and one read request with a page table read address different from the preceding three read requests to the physical memory through the identical-read-address merge module 343, and when the PDE2 cache TLB sends the first page table read request to the identical-read-address merge module 343, the merge signal is in an invalid state, and at this time, the identical-read-address merge module 343 records the page table read address of the first page table read request and sends the page table read request to the physical memory, and makes the merge signal being valid. When the PDE2 cache TLB sends the second page table read request to the identical-read-address merge module 343, the identical-read-address merge module 343 determines whether the merge signal is valid, because the merge signal is valid at this time, the identical-read-address merge module 343 compares this request with the page table read address of the first page table read request, and if the comparison shows they are identical, the merge signal, the virtual address and the hardware access unit identifier are sent to a virtual address translation request query selection module 333. If the first page table read request reads back PDE or PTE data from the physical memory before the PDE2 cache TLB sends the third page table read request to the identical-read-address merge module, the identical-read-address merge module 343 determines whether the merge signal is valid at this time, and if it is valid, turning the merge signal to be invalid. At this point, when the PDE2 cache TLB sends the third identical page table read address read request to the identical read address, because the merge signal is invalid, a page table read request is sent to the physical memory and the address merge signal is turned to be valid. When the PDE2 cache TLB sends the fourth page table read request to the identical-read-address merge module 343, because the merge signal is valid, it is necessary to determine whether the address of the page table read request is consistent with the recorded page table read request address, and if the comparison shows they are inconsistent, the merge signal is turned to be invalid, and the page table read request is sent to the physical memory. If no PTE or PDE data has been returned before sending the third page table read request, the identical-read-address merge module 343 merges the first page table read request, the second page table read request, and the third page table read request.

The virtual address translation request cache module 313 is configured to cache the virtual address translation request from L2 TLB 310.

The virtual address translation request query selection module 333 is configured to process the virtual address translation request, that is, after obtaining the virtual address translation request data from the virtual address translation request, it determines from which level of the PDE cache TLB the virtual address translation request starts matching according to the register configuration. Taking the example of starting the match from a PDE2 cache TLB, the virtual address translation request query selection module 333 first obtains a PDE2 page table read address by adding the base address of the register configuration to the 47th to 39th bits of the virtual address, then acquires the index bits and tag bits of the PDE2 cache TLB according to the specified address range in the PDE2 page table read address. For example, when the depth of a target TLB is 128, the 12th to 6th bits of the 48-bits PDE2 read address may be used as the index bits of the PDE2 cache TLB, and the 47th to 6th bits may be used as the tag bits, in which the specific selection of which bits of the PDE2 read address serve as the index and tag may be changed according to the register configuration. After calculating the PDE2 read address, the index bits, and the tag bits, they are sent to the PDE2 cache TLB together with the virtual address and the hardware access unit identifier. The virtual address translation request query and selection module 333 receives data either from the PDE2 cache TLB or the PDE2 data returned from the physical memory. If the virtual address translation request query selection module 333 receives the PDE2 data returned from the physical memory, it sends the PDE2 data along with the corresponding PDE2 cache TLB index and tag information to the PDE2 cache TLB, to update the data in the PDE2 cache TLB.

The virtual address translation request query selection module 333 in response to receiving PDE2 data from the PDE2 cache TLB or from the physical memory, determines whether the PDE2 data may be used as PTE. If the PDE2 data may be used as PTE, the PDE2 data along with the corresponding virtual address and hardware access unit identifier are sent to a translation information cache module 323. If the PDE2 data cannot be used directly, the PDE1 read address is obtained by adding the PDE1 page table physical base address field information in the PDE2 data to the 38th to 30th bits of the virtual address, and the index and tag corresponding to the virtual address translation request in the PDE1 cache TLB are calculated according to the PDE1 read address, and the subsequent process is similar to the above process; until reading back the PTE from the physical memory, then the PTE data, along with the virtual address and the hardware access unit identifier (including the merged valid virtual address and hardware access unit identifier) that match the PTE data are sent to the translation information cache module 323.

The PDE2 cache TLB, the PDE1 cache TLB, and the PDE0 cache TLB are configured to receive PDE read requests and PDE write requests from the virtual address translation request query selection module 333. The PDE read request includes information such as PDE read address, index, tag, virtual address, and hardware access unit identifier, etc.; matching is performed in a cache TLB according to the index bits and tag bits; and if the match is successful, the PDE data along with the virtual address and the hardware access unit identifier are sent to the virtual address translation request query selection module 333; if the match fails, that is, a miss occurs, the page table read address along with the virtual address and the hardware access unit identifier are sent to the identical-read-address merge module 343. For a PDE write request, when a miss occurs in the PDE cache TLB, the PDE data read back from physical memory in conjunction with index and tag information is used to update the data in the PDE cache TLB.

The identical-read-address merge request module 343 is configured to determine whether page table read requests from the PDE cache TLB can be merged. If the page table read requests can be merged, the merged virtual address along with the hardware access unit identifier are sent to the virtual address translation request query selection module 333; and if the page table read requests cannot be merged, the page table read requests are sent to the physical memory. In some embodiments of the present disclosure, for example, the merge function may be enabled or disabled through the register configuration.

The translation information cache module 323 is configured to receive PTE data along with the corresponding virtual address and hardware access unit identifier, and the like, queried from the virtual address translation request query selection module 333, and to send these data to the L2 TLB 310 when the L2 TLB 310 is in the "idle" state.

In some embodiments of the present disclosure, a multi-level page table query module includes an identical-read-address request merge module and a virtual address translation request query selection module; after the multi-level page table query module sends a page table read request to the physical memory, the identical-read-address merge module records the page table read address data along with the virtual address and the hardware access unit identifier corresponding to the read request, and makes the merge valid signal be valid; and when sending a next page table read request to the physical memory, if the merge valid signal is valid, compares whether the page table read request is consistent with the preceding page table read address. If the page table read address of the page table read request is consistent with the preceding page table read address, the merge valid signal along with the virtual address and the hardware access unit identifier are sent to the virtual address translation request query selection module within the multi-level page table query module, and the page table read request is no longer sent to physical memory; if the current page table read address is inconsistent with the preceding page table read address, the page table read request is sent to the physical memory and the merge valid signal is invalidated. After reading back the matched PTE from the physical memory, the virtual address translation request arbitration module sends all virtual address translation request information (including the merged virtual address translation request) that matches the PTE to a L2 TLB module, thereby effectively merging the identical read address requests in the requests initiated by the address translation module to the physical memory, and alleviating the congestion problem without reducing the hit rate of the address translation module on virtual address translation requests.

It should be noted that in the above embodiments, the multi-level page table query module does not contain a cache for storing the PTE page table, but a cache structure for a PTE page table may also be added to the multi-level page table query module as the structure shown in Fig. 1A.

Fig. 8A shows a flowchart of the method for S204 in Fig. 2B provided by at least one embodiment of the present disclosure.

As shown in Fig. 8A, S204 includes S214 to S244.

S214: calculating an average access value of count values of the plurality of sets of translation lookaside buffers based on the count value of each set of the plurality of sets of translation lookaside buffers.

S224: acquiring a permitted access deviation.

S234: calculating an effective access rate of the plurality of sets of translation lookaside buffers based on the permitted access deviation and the average access value.

S244: determining, based on the effective access rate, whether the first mapping algorithm requires updating.

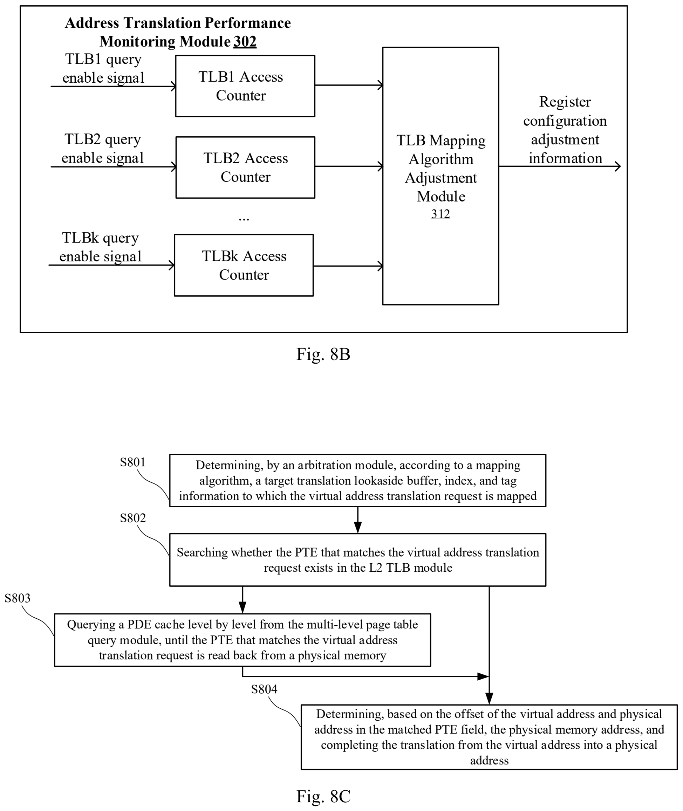

The method described in Fig. 8A is illustrated below in conjunction with Fig. 8B.

Fig. 8B shows a schematic block diagram of the address translation performance monitoring module in Fig. 3 provided by at least one embodiment of the present disclosure.

The address translation performance monitoring module 302 is configured to record the number of queries for each set of k sets of TLBs in a L2 TLB module within a fixed clock cycle, and to determine whether the TLB mapping algorithm in the arbitration module 301 needs to be adjusted according to an adjustment algorithm, and to adaptively adjust the TLB mapping algorithm. The TLB mapping algorithms include, for example, a first mapping algorithm, a second mapping algorithm, and the like.

As shown in Fig. 8B, the address translation performance monitoring module 302 includes k TLB access counters and a TLB mapping algorithm adjustment module 312. Each of the k TLB access counters is, for example a 48-bits counter or a counter with other bits.

The k TLB access counters include, for example, a TLB1 access counter, a TLB2 access counter, ..., and a TLBk access counter.

A TLBx access counter is configured to record access to the TLBx in the L2 TLB module, where x is less than or equal to k and greater than or equal to 1. For example, on the rising edge of each clock, if the TLBx query enable from the arbitration module 301 is valid, the TLBx access counter is incremented by 1.

In some embodiments of the present disclosure, the address translation performance monitoring module may further include other types of counters, such as counters for address translation latency, specific PTE error types TLB misses, and the like.

For S214, for example, k sets of TLBs are counted separately by k TLB access counters to obtain a count value for each of the k sets of translation lookaside buffers.

The TLB mapping algorithm tuning module 312 is configured to determine whether a mapping algorithm adjustment needs to be performed according to the count values of the TLB access counters, and to adaptively adjust the TLB mapping algorithm if a mapping algorithm adjustment is required.

For example, the TLB mapping algorithm adjustment module 312 reads the count values of the k TLB access counters every F clock, and calculates the average access value Ave_tlb of accessing the k sets of TLB modules over F clock cycles, and clears the values of the k sets of TLB access counters. For example, the average access value Ave_tlb may be calculated according to the following formula.

$$Ave\_tlb = (N_{TLB0} + N_{TLB1} + ... + N_{TLBk})\ /k,$$

where the $N_{TLBx}$ represents the count value of the TLBx access counter.

For S224, for example, the permitted access deviation is $\Delta$, and the permitted access deviation may be set by those skilled in the art as required, and the present disclosure does not limit the value of the permitted access deviation.

For S234, for example, it includes: calculating, based on the permitted access deviation, an access deviation value of each set of the plurality of sets of translation lookaside buffers; and calculating, based on the access deviation value, an effective utilization indicator value of each set of the plurality of sets of translation lookaside buffers; and setting the average value of the effective utilization indicator values of the plurality of sets of translation lookaside buffers as the effective access rate.

For example, an access deviation value $n_\Delta$ that permits each set of TLBs to access is calculated by the following formula.

$$n_\Delta = Ave\_tlb \times \Delta$$

For example, for each set of the plurality of sets of translation lookaside buffers, in response to the sum of the access deviation value and the count value being greater than or equal to the average access value, the effective utilization indicator value of the translation lookaside buffer is set to a first preset value, and in response to the sum of the access deviation value and the count value being less than the average access value, the effective utilization indicator value of the translation lookaside buffer is set to a second preset value. For example, the first preset is 1 and the second preset is 0.

If $N_{TLBx} + n_\Delta \geq Ave\_tlb$, the effective utilization indicator value $E_{TLBx}$ of TLBx is 1, otherwise, it is 0. Next, for example, the average value of the effective utilization indicator values for TLBs may be calculated as an effective access rate TLB_usaget by the following formula.

$$TLB\_usaget= (E_{TLB0}+E_{TLB1}+...+E_{TLBk}) /k$$

For S244, for example, in response to the effective access rate TLB_usaget being greater than or equal to a preset access rate, it is determined that the first mapping algorithm does not require updating; and in response to the effective access rate TLB_usaget being less than the preset access rate, it is determined that the first mapping algorithm requires updating.

When TLB_usaget≥α, the first mapping algorithm does not require updating, and an arbitration module 301 still selects a target translation lookaside buffer according to the first mapping algorithm, where α is the preset access rate, 0 < α≤1, and may be set to different values according to the value of k. When TLB_usaget≤α, it is required to update the first mapping algorithm to a second mapping algorithm, and the arbitration module 301 selects a target translation lookaside buffer according to the second mapping algorithm.

For example, the TLB mapping algorithm adjustment module 312 sends the mapping algorithm for selecting the target register in the arbitration module 301 along with the related register configuration adjustment information to a register configuration module 304.

In some embodiments of the present disclosure, a first mapping algorithm includes: determining, according to a first target bit of an object virtual address in a virtual address translation request, a target translation lookaside buffer, and a second mapping algorithm includes: determining, based on a second target bit of the object virtual address in the virtual address translation request, a target translation lookaside buffer, where the first target bit and the second target bit are different.

For example, the first target bit includes consecutive first bits in the object virtual address, and the second target bit includes consecutive second bits in the object virtual address. For example, setting the 26th to 24th bits of a 48-bits virtual address as a plurality of first bits, and setting the 25th to 23th bits of a 48-bits virtual address as a plurality of second bits. The first target bit and the second target bit being consecutive plurality of bits enables uniform access to a plurality of sets of translation lookaside buffers.

For example, k=8 and at this time, an arbitration module 301 uses the 26th to 24th bits of the 48-bits virtual address as the mapping results for selecting from 8 sets of TLBs. If the TLB_usaget result is less than 0.8 (at this point the value of α is 0.8) after 109 clocks, the TLB mapping algorithm adjustment module 312 selects the 25th to 23rd bits of the 48-bits virtual address as the register configuration adjustment information and sends it to the register configuration module 304, and then sends it to the arbitration module to adjust the TLB mapping algorithm.

In some other embodiments of the present disclosure, the first target bit or the second target bit may also be a discontinuous plurality of bits.

It should be noted that although in the above embodiments the TLB mapping algorithm is an adjustment for the target translation lookaside buffer of the mapping, the embodiments of the present disclosure are not limited thereto, and may further include adaptive adjustment algorithms for index and tag.

Before the TLB mapping algorithm is adjusted, the virtual address translation requests that have obtained the target TLB information, the tag information, and the index information through the arbitration module 301 still query in the L2 TLB module according to the information acquired before the adjustment. After the TLB mapping algorithm is adjusted, the virtual address translation requests, which have not been processed by the translation request input arbitration module in the arbitration module 301, acquire new target TLB information, tag information, and index information according to a new TLB mapping algorithm, and then query in the L2 TLB module. It should be noted that after the arbitration module 301 receives the register configuration adjustment information from the register configuration module 314, the data in k sets of TLBs of L2 TLB remains unchanged. After the TLB mapping algorithm is adjusted, the data in the TLBs is updated by L2 TLB through a missed virtual address translation request.

Fig. 8C shows a flowchart of another address translation method provided by at least one embodiment of the present disclosure.

As shown in Fig. 8C, the address translation method includes S801 to S804.

S801: determining, by an arbitration module, according to a mapping algorithm, a target translation lookaside buffer, index, and tag information to which the virtual address translation request is mapped.

For example, after receiving a virtual address translation request from a hardware access unit, the arbitration module selects the virtual address translation request to be processed through a Round-Robin algorithm, and after determining the target TLB, index, tag and other information corresponding to the virtual address translation request according to the mapping algorithm and the virtual address, sends these information along with the virtual address translation request to a L2 TLB module. S801 is, for example, similar to performing S201 in Fig. 2A.

S802: searching whether the PTE that matches the virtual address translation request exists in the L2 TLB module. If the PTE that matches the virtual address translation request does not exist in the L2 TLB, S803 is performed. If the PTE that matches the virtual address translation request exists in the L2 TLB, S804 is performed. The specific implementation process of S802 may be to read the target TLB information, index, and tag information in the request, and to compare it with the tag information stored in the index row of the target TLB, thereby to determine whether the PTE that matches the virtual address translation request exists.

S803: querying a PDE cache level by level from the multi-level page table query module, until the PTE that matches the virtual address translation request is read back from a physical memory. After receiving the virtual address translation request from S802, whether the PDE that matches the virtual address translation request exists is searched level by level from the multi-level page table query module, until the PDE0 that matches the virtual address translation request is obtained; and after reading back the PTE, according to the PTB physical base address in the PDE0 field and the offset corresponding to the virtual address field, from the physical memory, S804 is performed.

S804: determining, based on the offset of the virtual address and physical address in the matched PTE field, the physical memory address, and completing the translation from the virtual address into a physical address.

S802 to S804 are, for example, similar to performing S202 in Fig. 2A.

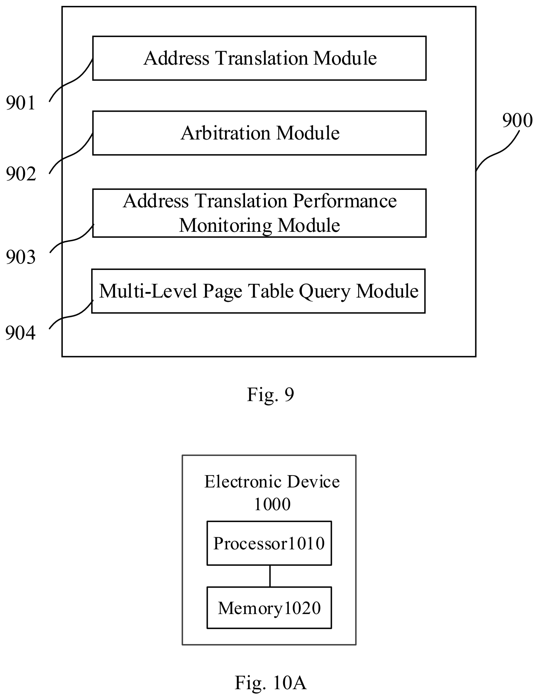

Fig. 9 shows a schematic diagram of an address translation apparatus 900 provided by at least one embodiment of the present disclosure. The address translation apparatus 900 includes an address translation module 901, an arbitration module 902 and an address translation performance monitoring module 903.

The arbitration module 902 is configured to, in response to obtaining a first virtual address translation request, determine a target translation lookaside buffer from a plurality of sets of translation lookaside buffers according to a first mapping algorithm, where the first virtual address translation request includes an object virtual address. The arbitration module 902 is similar to the arbitration module 301 in Fig. 3 above, please refer to the description above. The arbitration module 902 performs, for example, the S201 in Fig. 2A.

The address translation module 901 includes a plurality of sets of translation lookaside buffers. Each set of the plurality of sets of translation lookaside buffers is configured to store first page table information for translating the object virtual address into an object physical address. The address translation module 901 is configured to: access the first page table information in the target translation lookaside buffer to translate the object virtual address into the object physical address. The address translation module 901 is similar to the L2 TLB in Fig. 3 above, please refer to the description above. The address translation module 901 performs, for example, S202 in Fig. 2A.

The address translation performance monitoring module 903 is configured to: acquire access frequency information for each set of the plurality of sets of translation lookaside buffers; determine, based on the access frequency information, whether the first mapping algorithm requires updating; and in response to determining that the first mapping algorithm requires updating, update the first mapping algorithm to a second mapping algorithm. The address translation performance monitoring module 903 is similar to the address translation performance monitoring module 302 in Fig. 3 above, please refer to the description above. The address translation performance monitoring module 903 performs, for example, S203 to S205 as shown in Fig. 2B.

When faced with a large number of virtual address translation requests with irregular memory access patterns, the address translation apparatus 900 adaptively adjusts a TLB mapping algorithm to avoid the situation where the virtual address translation requests are only mapped to a single TLB, ensuring the utilization of TLB resources.

In some embodiments of the present disclosure, as shown in Fig. 9, the address translation apparatus 900 further includes a multi-level page table query module 904, and the multi-level page table query module 904 includes second page table information.

The address translation module 901 is configured to: access the first page table information in the target translation lookaside buffer, and determine whether the first target page table information that matches the first virtual address translation request exists in the first page table information; and in response to the first target page table information not existing in the target translation lookaside buffer, provide the first virtual address translation request to the multi-level page table query module 904. The multi-level page table query module 904 is configured to: receive the first virtual address translation request provided by an address translation module; determine whether the second target page table information that matches the first virtual address translation request exists in the second page table information; and in response to the second target page table information that matches the first virtual address translation request not existing in the second page table information, acquire the translation information provided by an external memory, and the translation information is used to translate the object virtual address into the object physical address.

For example, the first page table information includes a plurality of page table entries, each page table entry corresponding to a physical page, the second page table information includes a multi-level page table, each level of page table includes a plurality of page directory entries, each page directory entry is used to point to the physical address of a next-level page table, and each page directory entry in the last-level page table of the multi-level page table is used to point to a page table entry in the first page table information.

In some embodiments of the present disclosure, the multi-level page table query module is configured to: acquire, based on the object virtual address and a base address, a first page table read address of at least one level of the multi-level page table; and determine, based on the first page table read address, whether the second target page table information that matches the first virtual address translation request exists in second page table information.

In some embodiments of the present disclosure, a multi-level page table query module 904 includes an identical-read-address merge unit and a translation information cache unit. The identical-read-address merge unit is configured to: in response to the second target page table information that matches the first virtual address translation request not existing in the second page table information, determine whether a merge signal is valid; in response to the merge signal being valid, compare whether the first page table read address is identical to a second page table read address of a second virtual address translation request preceding the first virtual address translation request; in response to the first page table read address being identical to the second page table read address, merge the first virtual address translation request with the second virtual address translation request, and wait for the translation information provided by an external memory in response to the second virtual address translation request. The translation information cache unit is configured to: cache the translation information, and provide the translation information to the address translation module in response to the address translation module being in an idle state.

Some embodiments of the present disclosure add an identical-read-address merge module into a multi-level page table query module, merging the identical read page table requests sent to a physical memory without affecting the TLB data updating and the virtual address translation of a L2 TLB module, effectively reducing congestion.

The multi-level page table query module 904 is similar to the multi-level page table query module 303 in Fig. 3, please refer to the description thereof above. The function and structure of the address translation apparatus 300 in Fig. 3 thereof above may be referred to for the function and structure of the address translation apparatus 900, and no details will be repeated here.

For example, the address translation module 901, the arbitration module 902, the address translation performance monitoring module 903, and the multi-level page table query module 904 may be hardware, software, firmware, and any feasible combination of them.

For example, the address translation module 901, the arbitration module 902, the address translation performance monitoring module 903, and the multi-level page table query module 904 may be a dedicated or general-purpose circuits, chips, or apparatuses, etc., or a combination of a processor and a memory. The specific implementation forms of the above-mentioned units are not limited by the embodiments disclosed herein.

It should be noted that in the embodiments of the present disclosure, each unit of the address translation apparatus 900 and the address translation apparatus 300 corresponds to each step of the address translation method, the relevant description of the address translation method thereof above may be referred to for specific functions of the address translation apparatus 900 and the address translation apparatus 300, and no details will be repeated here. The components and structures of the address translation apparatus 900 shown in Fig. 9 are only exemplary and no limitation, and the address translation apparatus 900 may include other components and structures as needed.

At least one embodiment of the present disclosure further provides an electronic device, and the electronic device includes a processor and a memory, and the memory includes one or more computer program modules. The one or more computer program modules are stored in the memory and are configured to be executed by the processor, and the one or more computer program modules include instructions for implementing the address translation method described above. The electronic device is capable of alleviating the uneven allocation of virtual address translation request translation lookaside buffer resources, improving the utilization of translation lookaside buffer resources.

Fig. 10A shows a schematic block diagram of an electronic device provided by some embodiments of the present disclosure. As shown in Fig. 10A, the electronic device 1000 includes a processor 1010 and a memory 1020. The memory 1020 is configured to store a non-transitory computer-readable instruction (e.g., one or more computer program modules). The processor 1010 is configured to execute the non-transitory computer-readable instruction, when the non-transitory computer-readable instruction are executed by the processor 1010, one or more steps of the address translation method described above may be performed. The memory 1020 and the processor 1010 may be interconnected via a bus system and/or other forms of connection mechanisms (not shown).

For example, the processor 1010 may be a central processing unit (CPU), a graphics processing unit (GPU), or another form of processing unit with data processing capabilities and/or program execution capabilities. For instance, the central processing unit (CPU) may be based on architectures such as X86 or ARM. The processor 1010 may be a general-purpose processor or a specialized processor, capable of controlling other components within the electronic device 1000 to perform desired functions.

For example, the memory 1020 may include any combination of one or more computer program products. Computer program products may include various forms of computer-readable storage media, such as a volatile memory and/or a non-volatile memory. The volatile memory may include, for example, a random access memory (RAM) and/or a cache memory. The non-volatile memory may include, for example, a read-only memory (ROM), a hard disk, an erasable programmable read-only memory (EPROM), a compact disc read-only memory (CD-ROM), a USB storage, a flash memory, and the like. One or more computer program modules may be stored on a computer-readable storage medium. The processor 1010 may execute one or more computer program modules to implement various functions of the electronic device 1000. The computer-readable storage medium may also store various applications and various data, as well as various data used and/or generated by applications.

It should be noted that in the embodiments disclosed herein, the specific functions and technical effects of the electronic device 1000 may be referenced from the preceding description of the address translation method and are not repeated here.

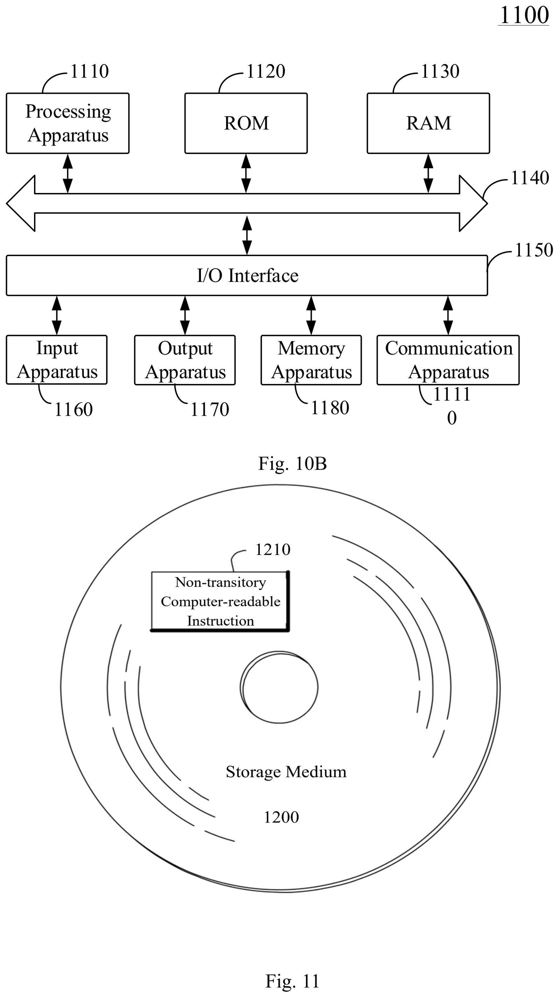

Fig. 10B shows a schematic block diagram of another electronic device provided by some embodiments of the present disclosure. The electronic device 1100 is, for example, suitable for implementing the address translation method provided by embodiments of the present disclosure. The electronic device 1100 may be a terminal device, etc. It should be noted that the electronic device 1100 shown in Fig. 10B is merely an example and does not impose any limitations on the functionality or scope of application of the embodiments of the present disclosure.

As shown in Fig. 10B, the electronic device 1100 may include a processing apparatus (e.g., a central processor, a graphics processor, etc.) 1110, which may perform various appropriate actions and processing based on programs stored in a read-only memory (ROM) 1120 or programs loaded from a storage apparatus 1180 into a random access memory (RAM) 1130. RAM 1130 also stores various programs and data required for the operation of the electronic device 1100. The processing apparatus 1110, ROM 1120, and RAM 1130 are interconnected via bus 1140. An input/output (I/O) interface 1150 is also connected to the bus 1140.

Typically, the following apparatuses may be connected to the I/O interface 1150: an input apparatus 1160, including for example a touch screen, touchpad, keyboard, mouse, camera, microphone, accelerometer, gyroscope, etc.; an output apparatus 1170, including for example a liquid crystal display (LCD), speaker, vibrator, etc.; the storage apparatus 1180, including for example tape, hard disk, etc.; and a communication apparatus 1190. The communication apparatus 1190 enables the electronic device 1100 to communicate through the wired or wireless method with other electronic devices to exchange data. Although Fig. 10B depicts the electronic device 1100 with various apparatuses, it should be understood that implementation or inclusion of all shown apparatuses is not required; the electronic device 1100 may alternatively implement or include more or fewer apparatuses.

For example, according to embodiments of the present disclosure, the aforementioned address translation method may be implemented as a computer software program. For instance, embodiments of the present disclosure include a computer program product including a computer program carried on a non-transitory computer-readable medium, where the computer program includes program code for executing the aforementioned address translation method. In such an embodiment, the computer program may be downloaded and installed from a network via a communication apparatus 1190, installed from a storage apparatus 1180, or installed from a ROM 1120. When the computer program is executed by a processing apparatus 1110, the functions defined in the address translation method provided by the embodiments of the present disclosure may be implemented.

At least one embodiment of the present disclosure further provides a computer-readable storage medium for storing non-transitory computer-readable instructions. When executed by a computer, these non-transitory computer-readable instructions implement the aforementioned address translation method. Utilizing this computer-readable storage medium alleviates uneven allocation of translation lookaside buffer resources during virtual address translation requests, thereby improving the utilization rate of translation lookaside buffer resources.

Fig. 11 shows a schematic diagram of a storage medium provided by some embodiments of the present disclosure. As shown in Fig. 11, the storage medium 1200 is configured to store a non-transitory computer-readable instruction 1210. For example, when the non-transitory computer-readable instruction 1210 is executed by a computer, one or more steps of the address translation method described above may be performed.

For instance, the storage medium 1200 may be implemented in the electronic device 1000 described above. For example, the storage medium 1200 may constitute the memory 1020 of the electronic device 1000 shown in Fig. 10A. Relevant descriptions concerning the storage medium 1200 may be referenced from the corresponding descriptions of the memory 1020 in the electronic device 1000 shown in Fig. 10A, and are not repeated herein.

Regarding this disclosure, the following points require clarification:

(1) The drawings accompanying the embodiments of this disclosure only depict structures relevant to the specific embodiments. Other structures may be referenced from conventional designs.

(2) Features within the same embodiment and across different embodiments may be combined with each other where no conflicts arise.

The above describes specific embodiments of the present disclosure. However, the scope of protection of the present disclosure is not limited thereto. Any changes or substitutions readily conceivable by a person skilled in the art within the scope of the disclosed technology should be encompassed within the scope of protection of the present disclosure. Therefore, the scope of protection of the present disclosure shall be determined by the scope of the claims.

## Claims

1. An address translation method, applied to an address translation apparatus, wherein the address translation apparatus comprises a plurality of sets of translation lookaside buffers, each set of translation lookaside buffers comprises first page table information for translating a virtual address into a physical address, and the method comprises:

   in response to obtaining a first virtual address translation request, determining a target translation lookaside buffer from the plurality of sets of translation lookaside buffers according to a first mapping algorithm, wherein the first virtual address translation request comprises an object virtual address; and
   accessing first page table information in the target translation lookaside buffer to translate the object virtual address into an object physical address,
   wherein the method further comprises:

   acquiring access frequency information for each set of the plurality of sets of translation lookaside buffers;
   determining, based on the access frequency information, whether the first mapping algorithm requires updating; and
   in response to determining that the first mapping algorithm requires updating, updating the first mapping algorithm to a second mapping algorithm.

2. The method according to claim 1, wherein the address translation apparatus further comprises a multi-level page table query module, and the multi-level page table query module comprises second page table information, and
   accessing the first page table information in the target translation lookaside buffer to translate the object virtual address into the object physical address comprises:

accessing the first page table information in the target translation lookaside buffer, and determining whether the first target page table information that matches the first virtual address translation request exists in the first page table information;
in response to the first target page table information not existing in the target translation lookaside buffer, providing the first virtual address translation request to the multi-level page table query module;
determining whether second target page table information that matches the first virtual address translation request exists in the second page table information; and
in response to the second target page table information that matches the first virtual address translation request not existing in the second page table information, translating the object virtual address into the object physical address based on translation information provided by an external memory.

3. The method according to claim 2, wherein the first page table information comprises a plurality of page table entries, each page table entry corresponds to a physical page,

   the second page table information comprises a multi-level page table, each level of the page table comprises a plurality of page directory entries, and each page directory entry is used to point to a physical address of a next-level page table,
   wherein each page directory entry in a last-level page table of the multi-level page table is used to point to a page table entry in the first page table information.

4. The method according to claim 3, wherein determining whether the second target page table information that matches the first virtual address translation request exists in the second page table information comprises:

   acquiring, based on the object virtual address and a base address, a first page table read address of at least one level of the multi-level page table; and
   determining, based on the first page table read address, whether the second target page table information that matches the first virtual address translation request exists in the second page table information.

5. The method according to claim 4, wherein in response to the second target page table information that matches the first virtual address translation request not existing in the second page table information, translating the object virtual address into the object physical address based on the translation information provided by the external memory, comprises:

in response to the second target page table information that matches the first virtual address translation request not existing in the second page table information, determining whether a merge signal is valid;
in response to the merge signal being valid, comparing whether the first page table read address is identical to a second page table read address of a second virtual address translation request preceding the first virtual address translation request;
in response to the first page table read address being identical to the second page table read address, merging the first virtual address translation request with the second virtual address translation request, and waiting for the translation information that is provided by the external memory in response to the second virtual address translation request; and
translating the object virtual address into the object physical address based on the translation information.

6. The method according to claim 5, wherein in response to the second target page table information that matches the first virtual address translation request not existing in the second page table information, translating the object virtual address into the object physical address based on the translation information provided by the external memory, further comprises:

in response to the first page table read address and the second page table read address being different, providing a page table read request based on the first virtual address translation request to the external memory to acquire the translation information from the external memory; and
updating the merge signal to be invalid.

7. The method according to claim 5, wherein in response to the second target page table information that matches the first virtual address translation request not existing in the second page table information, translating the object virtual address into the object physical address based on the translation information provided by the external memory, further comprises:

in response to the merge signal being invalid, providing a page table read request based on the first virtual address translation request to the external memory to acquire the translation information from the external memory; and
updating the merge signal to be valid.

8. The method according to claim 5, wherein in response to the second target page table information that matches the first virtual address translation request not existing in the second page table information, translating the object virtual address into the object physical address based on the translation information provided by the external memory, further comprises:
in response to receiving the translation information that is provided by the external memory in response to the second virtual address translation request, updating the merge signal to be invalid.

9. The method according to claim 6 or 7, wherein the page table read request comprises: a page table read address and an object virtual address of a virtual address translation request, and a hardware access unit identifier which providing the virtual address translation request,
wherein the page table read address is obtained based on the base address and page directory entry data of at least one level of the multi-level page table.

10. The method according to claim 3, wherein accessing the first page table information in the target translation lookaside buffer to translate the object virtual address into the object physical address comprises:

accessing the first page table information in the target translation lookaside buffer, and determining whether a target page table entry that matches the object virtual address translation request exists in the first page table information; and
in response to the target page table entry that matches the object virtual address translation request existing in the first page table information, determining the object physical address corresponding to the object virtual address based on the target page table entry and an in-page offset indicated by the object virtual address.

11. The method according to claim 10, wherein the translation information comprises the target page table entry.

12. The method according to any one of claims 1-11, wherein acquiring the access frequency information for each set of the plurality of sets of translation lookaside buffers comprises:
counting a number of accesses for each set of the plurality of sets of translation lookaside buffers, and obtaining a count value of each set of the plurality of sets of translation lookaside buffers within a preset time period.

13. The method according to claim 12, wherein determining, based on the access frequency information, whether the first mapping algorithm requires updating, comprises:

calculating an average access value of count values of the plurality of sets of translation lookaside buffers based on the count value of each set of the plurality of sets of translation lookaside buffers;
acquiring a permitted access deviation;
calculating an effective access rate of the plurality of sets of translation lookaside buffers based on the permitted access deviation and the average access value; and
determining, based on the effective access rate, whether the first mapping algorithm requires updating.

14. The method according to claim 13, wherein calculating the effective access rate of the plurality of sets of translation lookaside buffers based on the permitted access deviation and the average access value comprises:

calculating an access deviation value of each set of the plurality of sets of translation lookaside buffers based on the permitted access deviation;
calculating an effective utilization indicator value of each set of the plurality of sets of translation lookaside buffers based on the access deviation value, wherein for each set of the plurality of sets of translation lookaside buffers, in response to sum of the access deviation value and the count value being greater than or equal to the average access value, setting an effective utilization indicator value of an translation lookaside buffer to a first preset value, and in response to the sum of the access deviation value and the count value being less than the average access value, setting the effective utilization indicator value of the translation lookaside buffer to a second preset value; and
setting an average value of effective utilization indicator values of the plurality of sets of translation lookaside buffers as the effective access rate.

15. The method according to claim 14, wherein determining, based on the effective access rate, whether the first mapping algorithm requires updating, comprises:

in response to the effective access rate being greater than or equal to a preset access rate, determining that the first mapping algorithm does not require updating; and
in response to the effective access rate being less than the preset access rate, determining that the first mapping algorithm requires updating.

16. The method according to any one of claims 1 to 15, wherein the first mapping algorithm comprises: determining the target translation lookaside buffer based on a first target bit of an object virtual address in a virtual address translation request, and

the second mapping algorithm comprises: determining the target translation lookaside buffer based on a second target bit of the object virtual address in the virtual address translation request,
wherein the first target bit and the second target bit are different.

17. The method according to claim 16, wherein the first target bit comprises a plurality of consecutive first bits in the object virtual address, and the second target bit comprises a plurality of consecutive second bits in the object virtual address.

18. An address translation apparatus, comprising:

an address translation module, comprising a plurality of sets of translation lookaside buffers; and
an arbitration module, configured to in response to obtaining a first virtual address translation request, determine a target translation lookaside buffer from a plurality of sets of translation lookaside buffers according to a first mapping algorithm, wherein the first virtual address translation request comprises an object virtual address,
wherein each set of the plurality of sets of translation lookaside buffers is configured to store the first page table information for translating the object virtual address into an object physical address,
the address translation module is configured to: access first page table information in the target translation lookaside buffer to translate the object virtual address into an object physical address,
wherein the address translation apparatus further comprises:
an address translation performance monitoring module, configured to:

acquire access frequency information for each set of the plurality of sets of translation lookaside buffers;

determine, according to the access frequency information, whether the first mapping algorithm requires updating; and

in response to determining that the first mapping algorithm requires updating, update the first mapping algorithm to a second mapping algorithm.

19. The address translation apparatus according to claim 18, further comprising: a multi-level page table query module, the multi-level page table query module comprises second page table information,

wherein the address translation module is configured to:

access the first page table information in the target translation lookaside buffer, and determine whether first target page table information that matches the first virtual address translation request exists in the first page table information; and

in response to the first target page table information not existing in the target translation lookaside buffer, provide the first virtual address translation request to the multi-level page table query module;

wherein the multi-level page table query module is configured to:

receive the first virtual address translation request provided by the address translation module;

determine whether second target page table information that matches the first virtual address translation request exists in the second page table information; and

in response to the second target page table information that matches the first virtual address translation request not existing in the second target page table information, acquire translation information provided by an external memory, wherein the translation information is used to translate the object virtual address into the object physical address.

20. The address translation apparatus according to claim 19, wherein the first page table information comprises a plurality of page table entries, each page table entry corresponding to a physical page, and

the second page table information comprises a multi-level page table, and each level of the page table comprises a plurality of page directory entries, and each page directory entry is used to point to a physical address of a next-level page table,

wherein each page directory entry in a last-level page table of the multi-level page table is used to point to a page table entry in the first page table information.

21. The address translation apparatus according to claim 20, wherein the multi-level page table query module is configured to:

acquire, based on the object virtual address and a base address, a first page table read address of at least one level of the multi-level page table; and

determine, based on the first page table read address, whether the second target page table information that matches the first virtual address translation request exists in the second page table information.

22. The address translation apparatus according to claim 21, wherein the multi-level page table query module comprises an identical-read-address merge unit and a translation information cache unit,

wherein the identical-read-address merge unit is configured to:

in response to the second target page table information that matches the first virtual address translation request not existing in the second page table information, determine whether a merge signal is valid;

in response to the merge signal being valid, compare whether the first page table read address is identical to a second page table read address of a second virtual address translation request preceding the first virtual address translation request; and

in response to the first page table read address being identical to the second page table read address, merge the first virtual address translation request with the second virtual address translation request, and wait for the translation information that is provided by the external memory in response to the second virtual address translation request,

wherein the translation information cache unit is configured to: cache the translation information, and in response to the address translation module being in an idle state, provide the translation information to the address translation module.

23. An electronic device, comprising:

a processor; and
a memory, comprising one or more computer program instructions,

wherein the one or more computer program instructions are stored in the memory, and the one or more computer program instructions, when executed by the processor, implement the address translation method according to any one of claims 1 to 17.

24. A computer-readable storage medium, non-transitorily storing a computer-readable instruction, wherein the computer-readable instruction, when executed by a processor, implements the address translation method according to any one of claims 1 to 17.

Fig. 1A

Fig. 1B

S201 — In response to obtaining a first virtual address translation request, determining a target translation lookaside buffer from a plurality of sets of translation lookaside buffers according to a first mapping algorithm, where the first virtual address translation request includes an object virtual address

S202 — Accessing first page table information in the target translation lookaside buffer to translate the object virtual address into an object physical address

Fig. 2A

S203 — Acquiring access frequency information for each set of the plurality of sets of translation lookaside buffers

S204 — Determining, based on the access frequency information, whether the first mapping algorithm requires updating

S205 — In response to determining that the first mapping algorithm requires updating, updating the first mapping algorithm to a second mapping algorithm

Fig. 2B

| Hardware Access Unit 1 | Hardware Access Unit 2 | ... | Hardware Access Unit n |
|---|---|---|---|
| L1 TLB | L1 TLB | | L1 TLB |

virtual address | physical address | virtual address | physical address | virtual address | physical address

Arbitration Module — 301

L2 TLB 310

Address Translation Performance Monitoring Module — 302

Multi-Level Page Table Query Module

Register Configuration Module — 304

**Address Translation Apparatus**

— 300

— 303

Physical Memory

Fig. 3

S212 — Accessing first page table information in the target translation lookaside buffer, and determining whether the first target page table information that matches the first virtual address translation request exists in the first page table information

S222 — In response to the first target page table information not existing in the target translation lookaside buffer, providing the first virtual address translation request to the multi-level page table query module

S232 — Determining whether second target page table information that matches the first virtual address translation request exists in second page table information

S242 — In response to the second target page table information that matches the first virtual address translation request not existing in the second page table information, translating the object virtual address into the object physical address based on translation information provided by an external memory

Fig. 4A

**Arbitration Module**
**301**

Hardware 1 virtual address translation request → Hardware 1 input FIFO cache

Hardware 2 virtual address translation request → Hardware 2 input FIFO cache

...

Hardware n virtual address translation request → Hardware n input FIFO cache

Register configuration information

Translation Request Input Arbitration Module 311 → Virtual address translation request

Hardware 1 virtual address translation result ← Hardware 1 output FIFO cache

Hardware 2 virtual address translation result ← Hardware 2 output FIFO cache

...

Hardware n virtual address translation result ← Hardware n output FIFO cache

Translation Result Output Arbitration Module 321 ← Virtual address translation result

Fig. 4B

**L2 TLB 310**

Fig. 5

Fig. 6

Fig. 7

**S214** Calculating an average access value of count values of the plurality of sets of translation lookaside buffers based on the count value of each set of the plurality of sets of translation lookaside buffers

**S224** Acquiring a permitted access deviation

**S234** Calculating an effective access rate of the plurality of sets of translation lookaside buffers based on the permitted access deviation and the average access value

**S244** Determining, based on the effective access rate, whether the first mapping algorithm requires updating

Fig. 8A

**Address Translation Performance Monitoring Module 302**

TLB1 query enable signal → [TLB1 Access Counter] →

TLB2 query enable signal → [TLB2 Access Counter] →

...

TLBk query enable signal → [TLBk Access Counter] →

[TLB Mapping Algorithm Adjustment Module 312] → Register configuration adjustment information →

Fig. 8B

S801 [Determining, by an arbitration module, according to a mapping algorithm, a target translation lookaside buffer, index, and tag information to which the virtual address translation request is mapped]

S802 [Searching whether the PTE that matches the virtual address translation request exists in the L2 TLB module]

S803 [Querying a PDE cache level by level from the multi-level page table query module, until the PTE that matches the virtual address translation request is read back from a physical memory]

S804 [Determining, based on the offset of the virtual address and physical address in the matched PTE field, the physical memory address, and completing the translation from the virtual address into a physical address]

Fig. 8C

901 — Address Translation Module

902 — Arbitration Module

903 — Address Translation Performance Monitoring Module

904 — Multi-Level Page Table Query Module

900

Fig. 9

Electronic Device 1000

Processor1010

Memory1020

Fig. 10A

1100

1110    1120    1130

Processing Apparatus    ROM    RAM

1140

I/O Interface    1150

Input Apparatus    Output Apparatus    Memory Apparatus    Communication Apparatus

1160    1170    1180    1111 0

Fig. 10B

1210

Non-transitory Computer-readable Instruction

Storage Medium

1200

Fig. 11

**EP 4 738 130 A1**

## INTERNATIONAL SEARCH REPORT

International application No.

**PCT/CN2024/140228**

| A. | CLASSIFICATION OF SUBJECT MATTER |
|---|---|

G06F 12/1009(2016.01)i;  G06F 12/1027(2016.01)i

According to International Patent Classification (IPC) or to both national classification and IPC

| B. | FIELDS SEARCHED |
|---|---|

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 缓冲器, 转换, 后备, 目标, 频次, 频率, 算法, 规则, 更新, 物理地址, 虚拟地址, 映射, 合并, TLB, translation lookaside buffer, target, frequency, algorithm, rule, update, physical address, virtual address, map, combination

| C. | DOCUMENTS CONSIDERED TO BE RELEVANT | |
|---|---|---|
| Category* | Citation of document, with indication, where appropriate, of the relevant passages | Relevant to claim No. |
| PX | CN 119046191 A (HYGON INFORMATION TECHNOLOGY CO., LTD.) 29 November 2024 (2024-11-29)<br>entire document | 1-24 |
| A | US 8707011 B1 (NVIDIA CORP.) 22 April 2014 (2014-04-22)<br>entire document | 1-24 |
| A | CN 104272279 A (ARM LIMITED) 07 January 2015 (2015-01-07)<br>entire document | 1-24 |
| A | CN 116383102 A (BEIJING WEIHEXIN TECHNOLOGY CO., LTD.) 04 July 2023 (2023-07-04)<br>entire document | 1-24 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 January 2025** | **23 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

35

## INTERNATIONAL SEARCH REPORT
### Information on patent family members

International application No.

**PCT/CN2024/140228**

| Patent document cited in search report | | | Publication date (day/month/year) | Patent family member(s) | | | Publication date (day/month/year) |
|---|---|---|---|---|---|---|---|
| CN | 119046191 | A | 29 November 2024 | None | | | |
| US | 8707011 | B1 | 22 April 2014 | None | | | |
| CN | 104272279 | A | 07 January 2015 | WO | 2013167886 | A2 | 14 November 2013 |
| | | | | WO | 2013167886 | A3 | 27 February 2014 |
| | | | | GB | 201418116 | D0 | 26 November 2014 |
| | | | | GB | 2515432 | A | 24 December 2014 |
| | | | | GB | 2515432 | B | 27 May 2020 |
| | | | | US | 2013304991 | A1 | 14 November 2013 |
| | | | | US | 9684601 | B2 | 20 June 2017 |
| | | | | KR | 20150016278 | A | 11 February 2015 |
| | | | | KR | 102244191 | B1 | 27 April 2021 |
| | | | | CN | 104272279 | B | 19 January 2018 |
| CN | 116383102 | A | 04 July 2023 | CN | 116383102 | B | 29 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411142514